# EUROPÄISCHE PATENTSCHRIFT

(11) **EP 4 144 044 B1**
(45) Veröffentlichungstag und Bekanntmachung des Hinweises auf die Patenterteilung: **11.06.2025**
(21) Anmeldenummer: 21717859.9
(22) Anmeldetag: 09.04.2021
(51) Int. Cl.: H04L 12/40

(54) **SCHNITTSTELLENMODUL FÜR EINE KOMMUNIKATIONSSTEUEREINRICHTUNG, SENDE-/EMPFANGSEINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
INTERFACE MODULE FOR A COMMUNICATION CONTROL DEVICE, TRANSMITTING/RECEIVING DEVICE FOR A SUBSCRIBER STATION OF A SERIAL BUS SYSTEM, AND METHOD FOR COMMUNICATION IN A SERIAL BUS SYSTEM
MODULE D'INTERFACE POUR UN DISPOSITIF DE COMMANDE DE COMMUNICATION, DISPOSITIF DE TRANSMISSION/RÉCEPTION POUR UNE STATION D'ABONNÉ D'UN SYSTÈME DE BUS SÉRIE, ET PROCÉDÉ DE COMMUNICATION DANS UN SYSTÈME DE BUS SÉRIE

(30) Priorität: 27.04.2020 DE 102020205275
(43) Veröffentlichungstag der Anmeldung: 08.03.2023
(73) Patentinhaber: Robert Bosch GmbH, 70442 Stuttgart (DE)
(72) Erfinder: HARTWICH, Florian, 72762 Reutlingen (DE); MUTTER, Arthur, 73765 Neuhausen (DE)
(86) Internationale Anmeldenummer: PCT/EP2021/059265
(87) Internationale Veröffentlichungsnummer: WO 2021/219341

(56) Entgegenhaltungen:
- EP-A1- 2 521 319
- CN-A- 108 614 474
- DE-A1- 102011 007 766

## Beschreibung

### Technisches Gebiet

Die vorliegende Erfindung betrifft ein Schnittstellenmodul für eine Kommunikationssteuereinrichtung, eine Sende-/Empfangseinrichtung für eine Teilnehmerstation eines seriellen Bussystems und ein Verfahren zur Kommunikation in einem seriellen Bussystem, das mit hoher Datenrate und großer Fehlerrobustheit arbeitet.

### Stand der Technik

Für die Kommunikation zwischen Sensoren und Steuergeräten, beispielsweise in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen.

Um Daten mit höherer Bitrate übertragen zu können als bei CAN, besteht im CAN FD Nachrichten-Format eine Option zur Umschaltung auf eine höhere Bitrate innerhalb einer Nachricht. Hierbei wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet. Bei CAN FD ist die Nutzdatenlänge von 8 auf bis zu 64 Bytes erweitert und sind die Datenübertragungsraten deutlich höher als bei CAN.

DE 10 2011 007 766 A1 beschreibt ein Verfahren und eine Vorrichtung zur seriellen Datenübertragung mit umschaltbarer Datencodierung. Ausgetauschte Nachrichten weisen eine logische Struktur gemäß der CAN-Spezifikation ISO 11898-1 auf, wobei in einem Bereich innerhalb einer ausgetauschten Nachricht die Codierung der Bits nach einem von der CAN-Norm ISO 11898-1 abweichenden Verfahren erfolgt, beispielsweise mit einer Amplituden- oder Frequenzumtastung oder -modulation. Für die Frequenzmodulation werden vorteilhaft mehrere zu sendende Bits einer Nachricht zusammengefasst und in eine Frequenzinformation umgewandelt. Die Frequenzmodulation kann unter Verwendung einer separaten Busanschlusseinheit oder Transceiver erfolgen, die an den Bus angeschlossen ist und von einem CAN-Controller über eine separate Verbindung, zusätzlich zu der bisherigen Busanschlusseinheit oder Transceiver, angesteuert wird.

Um Daten schneller vom sendenden Busteilnehmer zum empfangenden Busteilnehmer zu übertragen als bei CAN FD, ist derzeit ein CAN FD-Nachfolge-Bussystem in Entwicklung. Hierbei soll neben einer höheren Datenrate in der Datenphase als bei CAN FD auch die bisher mit CAN FD erreichte Nutzdatenlänge von bis zu 64 Bytes erhöht werden. Jedoch sollen auch bei dem CAN FD-Nachfolge-Bussystem die Vorteile der Robustheit eines CAN oder CAN FD basierten Kommunikationsnetzwerks erhalten bleiben.

Denkbar ist, die höhere Datenrate in der Datenphase dadurch noch zu erhöhen, dass zusätzlich der Physical Layer umgeschaltet wird, der der Bitübertragungsschicht oder Schicht 1 des bekannten OSI-Modells (Open Systems Interconnection Modell) entspricht. In diesem Fall ist jedoch die Betriebsart der Sende-/Empfangseinrichtung umzuschalten, welche die Signale auf den Bus treibt und von dem Bus empfängt. Für eine robuste Datenübertragung muss die Umschaltung der Betriebsart der Sende-/Empfangseinrichtung zwischen den einzelnen Sende- und Empfangsbetriebsarten möglichst reibungslos funktionieren. Nur so sind zusätzliche Übertragungen aufgrund von Übertragungsfehlern wegen einer fehlerhaften Umschaltung der Betriebsart der Sende-/Empfangseinrichtung vermeidbar.

Je schneller die Daten auf dem Bus übertragen werden, desto höhere Anforderungen sind außerdem an die Qualität des Signals zu stellen, das der Protokoll-Controller der Teilnehmerstation vom Bus empfängt. Ist beispielsweise die Flankensteilheit der Bits des empfangenen Signals zu gering und die Spezifikation in dem Protokoll-Controller nicht genau genug, kann das empfangene Signal nicht korrekt decodiert werden.

Wird die Flankensteilheit der Bits des empfangenen Signals erhöht, ergibt sich eine höhere Abstrahlung. Je genauer die Spezifikation in dem Protokoll-Controller zu sein hat, desto höher sind die Kosten für den Protokoll-Controller und desto komplizierter wird die Decodierung des empfangenen Signals.

### Offenbarung der Erfindung

Daher ist es Aufgabe der vorliegenden Erfindung, ein Schnittstellenmodul für eine Kommunikationssteuereinrichtung, eine Sende-/Empfangseinrichtung für eine Teilnehmerstation eines seriellen Bussystems sowie ein Verfahren zur Kommunikation in einem seriellen Bussystem bereitzustellen, welche die zuvor genannten Probleme lösen. Insbesondere sollen ein Schnittstellenmodul für eine Kommunikationssteuereinrichtung, eine Sende-/Empfangseinrichtung für eine Teilnehmerstation eines seriellen Bussystems sowie ein Verfahren zur Kommunikation in einem seriellen Bussystem bereitgestellt werden, bei welchen bei großer Fehlerrobustheit eine hohe Datenrate und eine Steigerung der Menge der Nutzdaten pro Rahmen realisiert werden kann.

Die Aufgabe wird durch ein Schnittstellenmodul für eine Kommunikationssteuereinrichtung für eine Teilnehmerstation eines seriellen Bussystems mit den Merkmalen von Anspruch 1 gelöst. Das Schnittstellenmodul hat mindestens ein Konfigurationsregister zur Konfiguration der Bitzeit einer ersten Kommunikationsphase eines Rahmens und/oder der einer zweiten Kommunikationsphase des Rahmens, mit dem Nachrichten zwischen Teilnehmerstationen des Bussystems ausgetauscht werden, und einen Modulator zur Modulation eines Sendesignals in ein moduliertes Sendesignal, das die in dem mindestens einen Konfigurationsregister konfigurierte Bitzeit der zweiten Kommunikationsphase hat, die sich von der Bitzeit der ersten Kommunikationsphase unterscheidet, wobei das Schnittstellenmodul ausgestaltet ist, in der ersten Kommunikationsphase das in den Modulator eingegebene Sendesignal an eine Sende-/Empfangseinrichtung der Teilnehmerstation auszugeben, um das Sendesignal auf einen Bus des Bussystems zu senden, und wobei das Schnittstellenmodul ausgestaltet ist, in der zweiten Kommunikationsphase das von dem Modulator erzeugte modulierte Sendesignal an die Sende-/Empfangseinrichtung der Teilnehmerstation auszugeben, um das modulierte Sendesignal auf einen Bus des Bussystems zu senden, wie in Anspruch 1 beschrieben.

Das Schnittstellenmodul ist in der Lage, die Umschaltung der Betriebsart der Sende-/Empfangseinrichtung für die verschiedenen Kommunikationsphasen sehr sicher und robust zu signalisieren. Dabei ist das Schnittstellenmodul derart ausgestaltet, dass die beiden Bitzeiten, die auch als Bitdauern oder Bitlängen bezeichnet werden können, je nach Kommunikationsphase unabhängig voneinander konfigurierbar sind. Dabei ermöglicht das Schnittstellenmodul, ohne zusätzliche teure Anschlüsse zwischen der Kommunikationssteuereinrichtung und der Sende-/Empfangseinrichtung die benötigte schnelle Datenübertragung für das CAN FD Nachfolgebussystem bereitzustellen.

Optional ist das Schnittstellenmodul zusätzlich derart ausgestaltet, dass die Symmetrie der Bits in einem Empfangssignal RxD erhalten bleibt, das die Sende-/Empfangseinrichtung aus einem vom Bus empfangenen Signal erzeugt hat und an die Kommunikationssteuereinrichtung sendet. Dies gilt sowohl beim Senden als auch beim Empfangen von CAN Rahmen. Allenfalls ist eine Asymmetrie von Bits in dem Empfangssignal RxD nur sehr geringfügig erhöht. Hierbei wendet das Schnittstellenmodul zur Erhaltung der Symmetrie des Signals ein weniger komplexes Verfahren als ein Line Coding Verfahren an, wie beispielsweise PWM Codierung, Manchester Codierung. Damit reduziert sich die Komplexität der Datenübertragung und der Dekodierung des Empfangssignals RxD.

Außerdem kann auch bei der differentiellen Übertragung des Empfangssignals RxD zwischen der Sende-/Empfangseinrichtung (Transceiver) und der Kommunikationssteuereinrichtung (Mikrocontroller) eine NRZ-Codierung (NRZ = Non-Return-To-Zero) erhalten bleiben. Als Folge davon können zur Datenübertragung zwischen der Sende-/Empfangseinrichtung (Transceiver) und der Kommunikationssteuereinrichtung (Mikrocontroller) nun Anschlüsse (Pins) mit langsamen Flanken verwendet werden. Die resultierende geringere Flankensteilheit der Bits des empfangenen Signals, insbesondere des Empfangssignals RxD, reduziert die Abstrahlung des Systems wesentlich.

Somit kann mit dem Schnittstellenmodul eine derartige Flankensteilheit der Bits des empfangenen Signals, insbesondere des Empfangssignals RxD, gewählt werden, dass die Anforderungen an die Abstrahlung problemlos erfüllt werden können. Außerdem muss die Kommunikationssteuereinrichtung zur Erhaltung der Symmetrie des Signals keine komplexen Line Coding Verfahren verwenden, wie beispielsweise PWM Codierung, Manchester Codierung. Damit reduziert sich die Komplexität der Datenübertragung und der Dekodierung des Empfangssignals RxD.

Darüber hinaus kann mit dem Schnittstellenmodul zwischen der Kommunikationssteuereinrichtung und der Sende-/Empfangseinrichtung in einer der Kommunikationsphasen eine von CAN bekannte Arbitration beibehalten werden und dennoch die Übertragungsrate gegenüber CAN oder CAN FD nochmals beträchtlich gesteigert werden. Dies kann dadurch erreicht werden, dass zwei Kommunikationsphasen mit unterschiedlicher Bitrate verwendet werden und der Beginn der zweiten Kommunikationsphase, in welcher die Nutzdaten mit höherer Bitrate als in der Arbitration übertragen werden, für die Sende-/Empfangseinrichtung sicher kenntlich gemacht wird. Daher kann die Sende-/Empfangseinrichtung sicher von einer ersten Kommunikationsphase in die zweite Kommunikationsphase umschalten.

Als Folge davon ist eine deutliche Steigerung der Bitrate und damit der Übertragungsgeschwindigkeit von Sender zum Empfänger realisierbar. Hierbei ist jedoch gleichzeitig eine große Fehlerrobustheit gewährleistet. Dies trägt mit dazu bei, eine Nettodatenrate von mindestens 10 Mbps zu realisieren. Noch dazu kann die Größe der Nutzdaten größer als 64 Byte sein, insbesondere bis zu 4096 Byte pro Rahmen betragen, oder je nach Bedarf eine beliebige Länge haben.

Das von der Kommunikationssteuereinrichtung durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Kommunikationssteuereinrichtung sind in den abhängigen Ansprüchen angegeben.

Das Schnittstellenmodul kann zudem einen ersten Multiplexer haben zum Empfang eines Steuersignals von der Kommunikationssteuereinrichtung und zum Empfang des Sendesignals und des modulierten Sendesignals sowie zur Ausgabe des Sendesignals oder des modulierten Sendesignals in Abhängigkeit von dem Steuersignal an die Sende-/Empfangseinrichtung.

Denkbar ist, dass das Schnittstellenmodul zudem einen Taktteilerblock zum Erzeugen eines Taktsignals auf der Grundlage eines Taktsignals hat, mit welchem die Kommunikationssteuereinrichtung das Sendesignal erzeugt, und einem in dem mindestens einen Konfigurationsregister konfigurierten Parameter, wobei der Modulator ausgestaltet ist, das modulierte Sendesignal auf der Grundlage des von dem Taktteilerblock erzeugten Taktsignals zu erzeugen.

Der Modulator ist zur Puls-Weiten-Modulation (PWM) des Sendesignals ausgestaltet. Für die Puls-Weiten-Modulation des Modulators kann das mindestens eine Konfigurationsregister mindestens zwei Parameter zur Bestimmung der Länge von zwei Phasen eines PWM-Symbols aufweisen. Zusätzlich weist das mindestens eine Konfigurationsregister einen Modulationsversatz als Parameter für die Puls-Weiten-Modulation des Modulators auf, wie in den Ansprüchen beschrieben.

Gemäß einem Ausführungsbeispiel hat das Schnittstellenmodul zudem einen Decodierblock zum Empfang eines digitalen Empfangssignals, das von der Sende-/Empfangseinrichtung aus einem vom Bus empfangenen Signal erzeugt wurde, und eines zu dem digitalen Empfangssignal inversen Empfangssignals und zum Decodieren des resultierenden differentiellen Signals in ein nicht-differentielles Empfangssignal, und einen zweiten Multiplexer zum Ausgeben des von dem Decodierblock erzeugten nicht-differentiellen Signals an die Kommunikationssteuereinrichtung, wenn die Sende-/Empfangseinrichtung in eine Betriebsart der zweiten Kommunikationsphase geschaltet ist. Hierbei ist es möglich, dass das Schnittstellenmodul derart ausgestaltet ist, dass der erste und zweite Multiplexer von demselben Steuersignal gesteuert werden.

Das zuvor beschriebene Schnittstellenmodul kann Teil einer Kommunikationssteuereinrichtung für eine Teilnehmerstation eines seriellen Bussystems sein, wobei die Kommunikationssteuereinrichtung zudem ein Kommunikationssteuermodul zum Erzeugen eines Sendesignals zum Steuern einer Kommunikation der Teilnehmerstation mit mindestens einer anderen Teilnehmerstation des Bussystems hat, bei welchem Bussystem zum Austausch von Nachrichten zwischen Teilnehmerstationen des Bussystems mindestens eine erste Kommunikationsphase und eine zweite Kommunikationsphase verwendet werden, wobei das Kommunikationssteuermodul zudem zur Erzeugung und zur Ausgabe an das Schnittstellenmodul eines Steuersignals ausgestaltet ist, das angibt, wann das von dem Modulator erzeugte modulierte Sendesignal an die Sende-/Empfangseinrichtung der Teilnehmerstation auszugeben ist. Hierbei signalisiert das Betriebsart-Signalisierungssignal dem Schnittstellenmodul möglicherweise, in welche Betriebsart die Sende-/Empfangseinrichtung abhängig von der Kommunikation auf dem Bus zu schalten ist.

Die Kommunikationssteuereinrichtung kann zudem einen ersten Anschluss zum Senden des Sendesignals an die Sende-/Empfangseinrichtung, einen zweiten Anschluss zum Empfangen eines digitalen Empfangssignals von der Sende-/Empfangseinrichtung, und einen dritten Anschluss zum Empfangen eines zu dem digitalen Empfangssignal inversen digitalen Empfangssignals von der Sende-/Empfangseinrichtung an einem STB-Anschluss, der zum Signalisieren eines Wartezustands an die Sende-/Empfangseinrichtung vorgesehen ist in dem keine Kommunikation am Bus stattfindet.

Optional ist das Kommunikationssteuermodul ausgestaltet ist, das Sendesignal in der ersten Kommunikationsphase mit Bits mit einer ersten Bitzeit zu erzeugen, die um mindestens den Faktor 10 größer als eine zweite Bitzeit von Bits ist, die das Kommunikationssteuermodul in der zweiten Kommunikationsphase in dem Sendesignal erzeugt.

Die zuvor genannte Aufgabe wird zudem durch eine Sende-/Empfangseinrichtung für eine Teilnehmerstation eines seriellen Bussystems mit den Merkmalen von Anspruch 11 gelöst. Die Sende-/Empfangseinrichtung hat ein Sende-/Empfangsmodul zum Senden eines Sendesignals auf einen Bus des Bussystems, bei welchem Bussystem zum Austausch von Nachrichten zwischen Teilnehmerstationen des Bussystems mindestens eine erste Kommunikationsphase und eine zweite Kommunikationsphase verwendet werden, und zum Erzeugen eines digitalen Empfangssignals aus einem von dem Bus empfangenen Signal, einen ersten Anschluss zum Empfang eines Sendesignals von einer Kommunikationssteuereinrichtung, einen zweiten Anschluss zum Senden des digitalen Empfangssignals an die Kommunikationssteuereinrichtung, einen Codierblock zum Erzeugen eines zu dem digitalen Empfangssignal inversen Empfangssignals, und einen dritten Anschluss zum Senden des inversen Empfangssignals an die Kommunikationssteuereinrichtung, wie in Anspruch 11 beschrieben.

Die Sende-/Empfangseinrichtung bietet dieselben Vorteile, wie sie zuvor in Bezug auf das Schnittstellenmodul und/oder die Kommunikationssteuereinrichtung genannt sind. Vorteilhafte weitere Ausgestaltungen der Sende-/Empfangseinrichtung sind in den abhängigen Ansprüchen angegeben.

Optional ist das Sende-/Empfangsmodul ausgestaltet, das Sendesignal als differentielles Signal auf den Bus zu senden, wobei der dritte Anschluss ein von Eingang aus Ausgang umschaltbarer STB-Anschluss ist, der zum Signalisieren eines Wartezustands an die Sende-/Empfangseinrichtung vorgesehen ist, in dem keine Kommunikation am Bus stattfindet.

Gemäß einer Option ist das in der ersten Kommunikationsphase von dem Bus empfangene Signal mit einem anderen Physical Layer erzeugt als das in der zweiten Kommunikationsphase von dem Bus empfangene Signal.

Denkbar ist, dass in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Kommunikationssteuereinrichtung und die zuvor beschriebene Sende-/Empfangseinrichtung können Teil einer Teilnehmerstation eines Bussystems sein, das zudem einen Bus und mindestens zwei Teilnehmerstationen umfasst, welche über den Bus derart miteinander verbunden sind, dass sie seriell miteinander kommunizieren können. Hierbei weist mindestens eine der mindestens zwei Teilnehmerstationen eine zuvor beschriebene Kommunikationssteuereinrichtung und eine zuvor beschriebene Sende-/Empfangseinrichtung auf.

Die zuvor genannte Aufgabe wird zudem durch ein Verfahren zur Kommunikation in einem seriellen Bussystem nach Anspruch 15 gelöst. Das Verfahren wird mit einer Teilnehmerstation für ein Bussystem ausgeführt, bei welchem zum Austausch von Nachrichten zwischen Teilnehmerstationen des Bussystems mindestens eine erste Kommunikationsphase und eine zweite Kommunikationsphase verwendet werden, wobei die Teilnehmerstation ein zuvor beschriebenes Schnittstellenmodul verwendet, und wobei das Verfahren die Schritte aufweist Modulieren, mit einem Modulator, eines Sendesignals in ein moduliertes Sendesignal, das eine in dem mindestens einen Konfigurationsregister konfigurierte Bitzeit der zweiten Kommunikationsphase hat, die sich von der Bitzeit der ersten Kommunikationsphase unterscheidet, Ausgeben, mit dem Schnittstellenmodul in der ersten Kommunikationsphase, des in den Modulator eingegebenen Sendesignals an eine Sende-/Empfangseinrichtung der Teilnehmerstation, um das Sendesignal auf einen Bus des Bussystems zu senden, und Ausgeben, mit dem Schnittstellenmodul in der zweiten Kommunikationsphase, des von dem Modulator erzeugten modulierten Sendesignals an die Sende-/Empfangseinrichtung der Teilnehmerstation, um das modulierte Sendesignal auf einen Bus des Bussystems zu senden, wie in Anspruch 15 beschrieben.

Das Verfahren bietet dieselben Vorteile, wie sie zuvor in Bezug auf das Schnittstellenmodul und/oder die Kommunikationssteuereinrichtung und/oder die Sende-/Empfangseinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein vereinfachtes schematisches Blockschaltbild einer Teilnehmerstation des Bussystems mit einem Schnittstellenmodul gemäß dem ersten Ausführungsbeispiel;
Fig. 4 eine zeitliche Darstellung der Abfolge von Kommunikationsphasen beim Senden einer Nachricht in dem Bussystem gemäß dem ersten Ausführungsbeispiel sowie des zugehörigen Steuersignals zum Umschalten der Betriebsart einer Sende-/Empfangseinrichtung der Teilnehmerstation von Fig. 3;
Fig. 5 bis Fig. 7 eine zeitliche Darstellung von Signalen bei einem Wechsel der Betriebsart der Sende-/Empfangseinrichtung der Teilnehmerstation von Fig. 3;
Fig. 8 bis Fig. 12 jeweils eine zeitliche Darstellung von Signalen bzw. Zuständen an der Teilnehmerstation von Fig. 3 zur Veranschaulichung einer PWM-Codierung eines Sendesignals einer Teilnehmerstation in der Datenphase einer über den Bus des Bussystems gesendeten Nachricht;
Fig. 13 und Fig. 14 eine zeitliche Darstellung einer Codierung der Zustände Data 0 und Data 1 mittels Puls-Weiten-Modulation PWM; und
Fig. 15 ein vereinfachtes schematisches Blockschaltbild einer Teilnehmerstation des Bussystems mit einem Schnittstellenmodul gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

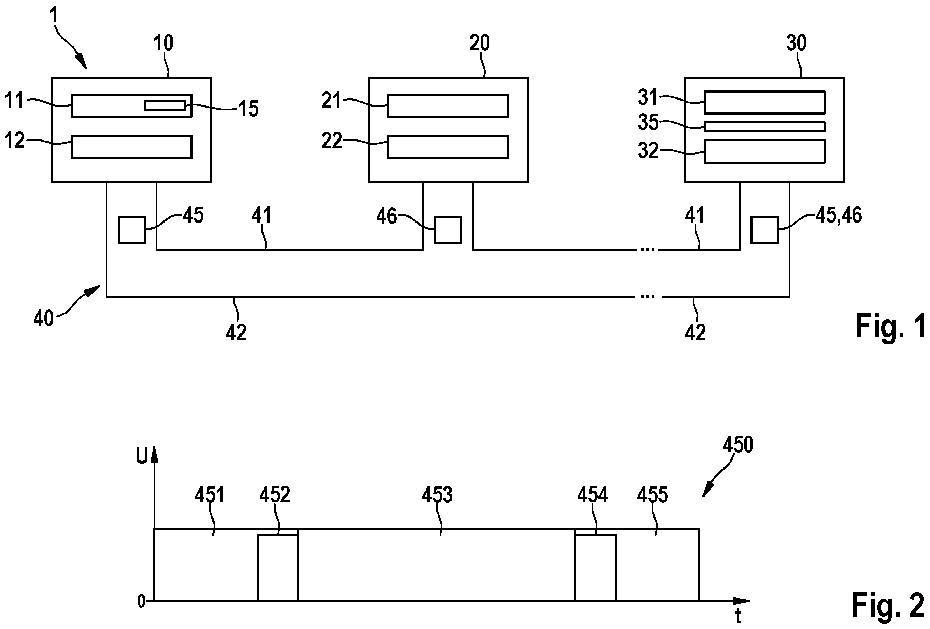

Fig. 1 zeigt als Beispiel ein Bussystem 1, das insbesondere grundlegend für ein CAN-Bussystem, ein CAN FD-Bussystem, ein CAN FD-Nachfolge-Bussystem, und/oder Abwandlungen davon, ausgestaltet ist, wie nachfolgend beschrieben. Das CAN FD-Nachfolge-Bussystem wird nachfolgend CAN XL genannt. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und ein Schnittstellenmodul 15. Im Unterschied dazu hat die Teilnehmerstation 20 eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und ein Schnittstellenmodul 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

In jeder Teilnehmerstation 10, 20, 30 werden die Nachrichten 45, 46 kodiert und in Form von Rahmen über eine TXD-Leitung und eine RXD-Leitung bitweise zwischen der jeweiligen Kommunikationssteuereinrichtung 11, 21, 31 und der zugehörigen Sende-/Empfangseinrichtungen 12, 22, 32 ausgetauscht. Dies ist nachfolgend genauer beschrieben.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtungen 11, 31 erstellen und lesen erste Nachrichten 45, die beispielsweise modifizierte CAN Nachrichten 45 sind, die nachfolgend auch CAN XL Nachrichten 45 genannt werden. Hierbei sind die modifizierten CAN Nachrichten 45 oder CAN XL Nachrichten 45 auf der Grundlage eines CAN FD-Nachfolgeformats aufgebaut, das in Bezug auf Fig. 2 detaillierter beschrieben ist. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtungen 12, 32 bereitzustellen oder von dieser zu empfangen. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Controller nach ISO 11898-1:2015 ausgeführt sein, insbesondere wie ein CAN FD toleranter Classical CAN-Controller oder ein CAN FD-Controller. Die Kommunikationssteuereinrichtung 21 erstellt und liest zweite Nachrichten 46, beispielsweise Classical CAN Nachrichten oder CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Im letzteren Fall ist die Kommunikationssteuereinrichtung 21 wie ein herkömmlicher CAN FD-Controller ausgeführt.

Die Sende-/Empfangseinrichtungen 12, 32 können bis auf die nachfolgend noch genauer beschriebenen Unterschiede als CAN XL-Transceiver ausgeführt sein.

Die Sende-/Empfangseinrichtungen 12, 32 sind zusätzlich oder alternativ wie ein herkömmlicher CAN FD Transceiver ausführbar. Die Sende-/Empfangseinrichtung 22 kann wie ein herkömmlicher CAN Transceiver oder CAN FD Transceiver ausgeführt sein.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Sende-/Empfangseinrichtung 12 oder der Sende-/Empfangseinrichtung 32 gesendet wird. Der CAN XL-Rahmen 450 ist für die CAN-Kommunikation auf dem Bus 40 in unterschiedliche Kommunikationsphasen 451 bis 455 unterteilt, nämlich eine Arbitrationsphase 451, eine erste Umschaltphase 452, eine Datenphase 453, eine zweite Umschaltphase 454 und eine Rahmenendphase 455.

In der Arbitrationsphase 451 wird beispielsweise am Anfang ein Bit gesendet, das auch SOF-Bit genannt wird und den Beginn des Rahmens bzw. Start of Frame anzeigt. In der Arbitrationsphase 451 wird außerdem ein Identifizierer mit beispielsweise 11 Bit zur Identifikation des Senders der Nachricht 45 gesendet. Bei der Arbitration wird mit Hilfe des Identifizierers bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der Umschaltphase 452 und der anschließenden Datenphase 453 einen exklusiven Zugriff auf den Bus 40 des Bussystems 1 bekommt.

In der ersten Umschaltphase 452 wird bei dem vorliegenden Ausführungsbeispiel die Umschaltung von der Arbitrationsphase 451 in die Datenphase 453 vorbereitet. Die Umschaltphase 452 kann ein Bit haben, das die Bitdauer T_B1 eines Bits der Arbitrationsphase 451 hat und mit dem Physical Layer der Arbitrationsphase 451 gesendet wird.

In der Datenphase 453 werden die Bits des Rahmens 450 mit dem Physical Layer der Datenphase 453 und mit einer Bitdauer T_B2 gesendet, die kürzer als die Bitdauer T_B1 eines Bits der Arbitrationsphase 451 ist. In der Datenphase 453 werden die Nutzdaten des CAN XL-Rahmens 450 bzw. der Nachricht 45 gesendet. Die Nutzdaten können auch als Datenfeld der Nachricht 45 bezeichnet werden. Hierfür kann in der Datenphase 453, nach einem Datenfeld-Identifizierer, der den Typ des Inhaltes im Datenfeld identifiziert, ein beispielsweise 11 Bit langer Datenlängencode (Data-Length-Code) gesendet werden. Der Code kann zum Beispiel Werte von 1 bis zu 2048 oder einen sonstigen Wert mit der Schrittweite von 1 annehmen. Der Datenlängencode kann alternativ weniger oder mehr Bit umfassen, so dass der Wertebereich und die Schrittweite andere Werte annehmen können. Anschließend folgen weitere Felder, wie zum Beispiel das Kopf-Prüfsummenfeld. Danach werden die Nutzdaten des CAN XL-Rahmens 450 bzw. der Nachricht 45 gesendet. Am Ende der Datenphase 453 kann beispielsweise in einem Prüfsummenfeld eine Prüfsumme über die Daten der Datenphase 453 sowie der Daten der Arbitrationsphase 451 enthalten sein. Der Sender der Nachricht 45 kann Stuffbits nach jeweils einer vorbestimmten Anzahl von gleichen Bits, insbesondere 10 gleichen Bits, als inverses Bit in den Datenstrom einfügen. Insbesondere ist die Prüfsumme eine Rahmenprüfsumme F_CRC, mit welcher alle Bits des Rahmens 450 bis zum Prüfsummenfeld abgesichert werden.

In der zweiten Umschaltphase 454 wird bei dem vorliegenden Ausführungsbeispiel die Umschaltung von der Datenphase 453 in die Rahmenendphase 455 vorbereitet. Dies bedeutet, dass zurück in die Übertragungsbetriebsart gemäß der Arbitrationsphase 451 geschaltet wird. Die Umschaltphase 454 kann ein Bit haben, das die Bitdauer T_B1 eines Bits der Arbitrationsphase 451 hat und mit dem Physical Layer der Arbitrationsphase 451 gesendet wird. Eine Unterscheidung von CAN XL-Rahmen oder CAN-Rahmen oder CAN FD-Rahmen ist hierbei jedoch nicht notwendig.

In der Rahmenendphase 455 kann nach zwei Bits AL2, AH2 in einem Endefeld mindestens ein Acknowledge-Bit ACK enthalten sein. Danach kann eine Folge von 7 gleichen Bits folgen, welche das Ende des CAN XL-Rahmens 450 anzeigen. Mit dem mindestens einen Acknowledge-Bit ACK kann mitgeteilt werden, ob ein Empfänger in dem empfangenen CAN XL-Rahmen 450 bzw. der Nachricht 45 einen Fehler entdeckt hat oder nicht.

Mindestens in der Arbitrationsphase 451 und der Rahmenendphase 455 wird ein Physical Layer wie bei CAN und CAN-FD verwendet. Zusätzlich kann in den Umschaltphasen 452, 454 zumindest teilweise, also bei der ersten Umschaltphase 452 am Anfang und bei der zweiten Umschaltphase 454 am Ende, ein Physical Layer wie bei CAN und CAN-FD verwendet werden. Der Physical Layer entspricht der Bitübertragungsschicht oder Schicht 1 des bekannten OSI-Modells (Open Systems Interconnection Modell).

Ein wichtiger Punkt während dieser Phasen 451, 452, 454, 455 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können.

Die Arbitration am Anfang eines Rahmens 450 bzw. der Nachricht 45, 46 und das Acknowledgement in der Rahmenendphase 455 des Rahmens 450 bzw. der Nachricht 45, 46 ist nur dann möglich, wenn die Bitdauer oder Bitzeit deutlich mehr als doppelt so lang ist wie die Signal-Laufzeit zwischen zwei beliebigen Teilnehmerstationen 10, 20, 30 des Bussystems 1. Daher wird die Bitrate in der Arbitrationsphase 451, der Rahmenendphase 454 und zumindest teilweise in den Umschaltphasen 452, 454 langsamer gewählt als in der Datenphase 453 des Rahmens 450. Insbesondere wird die Bitrate in den Phasen 451, 452, 454, 455 als 500 kbit/s gewählt, woraus eine Bitdauer oder Bitzeit von ca. 2µs folgt, wohingegen die Bitrate in der Datenphase 453 als 5 bis 10 Mbit/s oder mehr gewählt wird, woraus eine Bitzeit von ca. 0,1µs und kürzer folgt. Somit ist die Bitzeit des Signals in den anderen Kommunikationsphasen 451, 452, 454, 455 um mindestens den Faktor 10 größer als die Bitzeit des Signals in der Datenphase 453.

Ein Sender der Nachricht 45, beispielsweise die Teilnehmerstation 10, beginnt ein Senden von Bits der Umschaltphase 452 und der anschließenden Datenphase 453 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat. Der Sender kann entweder nach einem Teil der Umschaltphase 452 auf die schnellere Bitrate und/oder den anderen Physical Layer wechseln oder erst mit dem ersten Bit, also mit dem Beginn, der anschließenden Datenphase 453 auf die schnellere Bitrate und/oder den anderen Physical Layer wechseln.

Ganz allgemein können in dem Bussystem mit CAN XL im Vergleich zu CAN oder CAN FD insbesondere folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifizierer und Arbitrierung nach dem CSMA/CR-Verfahren,
b) Steigerung der Nettodatenrate auf etwa 10 Megabit pro Sekunde,
c) Anheben der Größe der Nutzdaten pro Rahmen auf etwa 2kbyte oder auf einen beliebiger Wert.

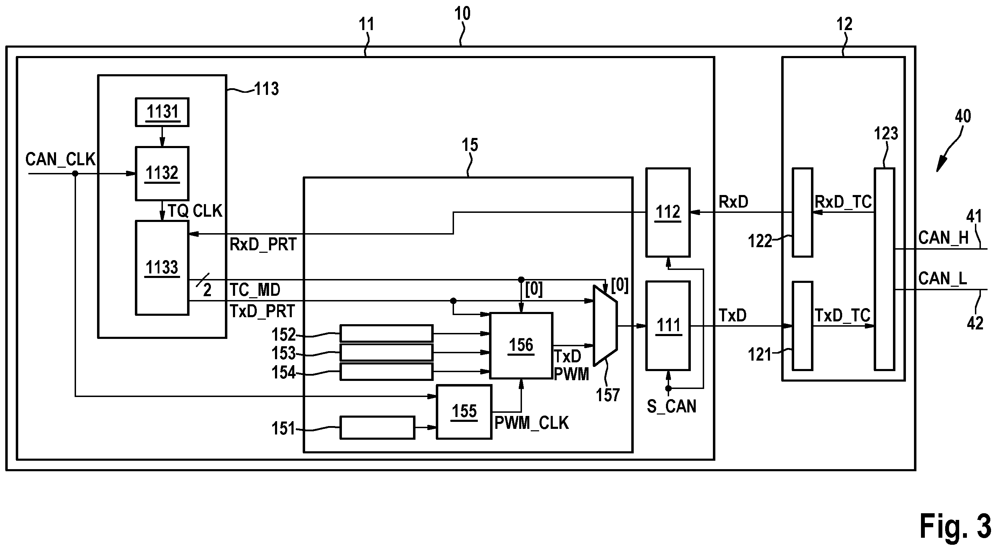

Fig. 3 zeigt den grundlegenden Aufbau der Teilnehmerstation 10 mit der Kommunikationssteuereinrichtung 11, der Sende-/Empfangseinrichtung 12 und dem Schnittstellenmodul 15.

Die Teilnehmerstation 30 ist in ähnlicher Weise aufgebaut, wie in Fig. 3 gezeigt, außer dass das Schnittstellenmodul 35 nicht in die Kommunikationssteuereinrichtung 31 integriert ist, sondern separat von der Kommunikationssteuereinrichtung 31 und der Sende-/Empfangseinrichtung 32 vorgesehen ist. Daher werden die Teilnehmerstation 30 und das Modul 35 nicht separat beschrieben. Die nachfolgend beschriebenen Funktionen des Schnittstellenmoduls 15 sind bei dem Schnittstellenmodul 35 identisch vorhanden.

Alternativ oder zusätzlich ist es möglich, dass das Schnittstellenmodul 15 nicht in die Einrichtung 11 integriert ist, sondern separat von der Kommunikationssteuereinrichtung 11 und der Sende-/Empfangseinrichtung 12 vorgesehen ist, wie bei der Teilnehmerstation 30.

Die Sende-/Empfangseinrichtung 12 ist an den Bus 40 angeschlossen, genauer gesagt dessen erste Busader 41 für CAN_H und dessen zweite Busader 42 für CAN_L. Im Betrieb des Bussystems 1 setzt die Sende-/Empfangseinrichtung 12 ein Sendesignal TxD der Kommunikationssteuereinrichtung 11 in entsprechende Signale CAN_H und CAN_L für die Busadern 41, 42 um und sendet diese Signale CAN_H und CAN_L auf den Bus 40. Auch wenn hier für die Sende-/Empfangseinrichtung 12 die Signale CAN_H und CAN_L genannt sind, so sind diese in Bezug auf die Nachricht 45 als Signale CAN-XL_H und CAN-XL_L zu verstehen, die in der Datenphase 453 von den herkömmlichen Signalen CAN_H und CAN_L in mindestens einem Merkmal abweichen, insbesondere in Bezug auf die Bildung der Buszustände für die verschiedenen Datenzustände des Signals TxD und/oder in Bezug auf die Spannung bzw. den Physical Layer und/oder die Bitrate.

Auf dem Bus 40 bildet sich ein Differenzsignal VDIFF = CAN_H - CAN_L aus. Mit Ausnahme eines Leerlauf- oder Bereitschaftszustands (Idle oder Standby), hört die Sende-/Empfangseinrichtung 12 im Normalbetrieb immer auf eine Übertragung von Daten bzw. Nachrichten 45, 46 auf dem Bus 40 und zwar unabhängig davon, ob die Teilnehmerstation 10 Sender der Nachricht 45 ist oder nicht. Die Sende-/Empfangseinrichtung 12 bildet aus den von dem Bus 40 empfangenen Signalen CAN_H und CAN_L ein Empfangssignal RxD und gibt dieses an die Kommunikationssteuereinrichtung 11 weiter, wie nachfolgend genauer beschrieben.

Der nachfolgend beschriebene Aufbau des Schnittstellenmoduls 15 bzw. der Kommunikationssteuereinrichtung 11 bzw. der Teilnehmerstation 10 stellt eine robuste und einfache Möglichkeit bereit, eine Signalisierung für eine Umschaltung der Betriebsart der Sende-/Empfangseinrichtung 12 von der Kommunikationssteuereinrichtung 11 an die Sende-/Empfangseinrichtung 12 vorzunehmen.

Gemäß Fig. 3 hat die Kommunikationssteuereinrichtung 11 zusätzlich zu dem Schnittstellenmodul 15 einen ersten Anschluss 111 für ein digitales Sendesignal TxD, einen zweiten Anschluss 112 für ein digitales Empfangssignal RxD und ein Kommunikationssteuermodul 114. Der Anschluss 111 ist ein Ausgangsanschluss. Der Anschluss 112 ist ein Eingangsanschluss. Die Sende-/Empfangseinrichtung 12 hat einen ersten Anschluss 121 für das digitale Sendesignal TxD, einen zweiten Anschluss 122 für das digitale Empfangssignal RxD, und ein Sende-/Empfangsmodul 123. Der Anschluss 121 ist ein Eingangsanschluss. Der Anschluss 122 ist ein Ausgangsanschluss.

Die Kommunikationssteuereinrichtung 11 ist als Mikrocontroller ausgestaltet oder weist einen Mikrocontroller auf. Die Kommunikationssteuereinrichtung 11 verarbeitet Signale einer beliebigen Anwendung, beispielsweise eines Steuergeräts für einen Motor, eines Sicherheitssystems für eine Maschine oder ein Fahrzeug, oder sonstige Anwendungen. Nicht gezeigt ist jedoch eine System-ASIC (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC können unter anderem die Sende-/Empfangseinrichtung 12 und eine nicht dargestellte Energieversorgungseinrichtung eingebaut sein, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern und/oder als Stromquelle ausgestaltet sein.

Die Sende-/Empfangseinrichtung 12 hat zudem ein Sende-/Empfangsmodul 123 zum Senden des Sendesignals TxD auf den Bus 40 und/oder zum Empfangen der Signale CAN_H, CAN_L von dem Bus 40. Das Sende-/Empfangsmodul 123 führt die Anbindung an das physikalische Medium durch, also den Bus 40 mit den Busadern 41, 42. Das Sende-/Empfangsmodul 123 treibt und decodiert die Signale CAN_H und CAN_L für die Busadern 41, 42 bzw. den Bus 40.

Das Kommunikationssteuermodul 113 hat einen Bitratenvorteilerblock 1131 bzw. BRP-Block 1131, einen Zeitquantengenerator 1132 und einen Protokoll-Controller 1133. In dem BRP-Block 1131 ist ein Bitratenvorteiler (BRP) von 1 bis 64 konfigurierbar. Der Zeitquantengenerator 1132 empfängt den konfigurierten Bitratenvorteiler (BRP) und das Taktsignal CAN_CLK und erzeugt daraus ein Zeitquantentaktsignal TQ_CLK. Der Zeitquantengenerator 1132 gibt das Zeitquantentaktsignal TQ_CLK an den Protokoll-Controller 1133 aus. Der Protokoll-Controller 1133 implementiert das CAN Protokoll, insbesondere das Protokoll für CAN XL oder CAN FD. Das Kommunikationssteuermodul 113, genauer gesagt der Protokoll-Controller 1133, ist für die Ausgabe folgender Ausgangssignale oder den Empfang folgender Eingangssignale ausgestaltet.

Das Signal TxD_PRT ist ein Ausgangssignal, das dem Sendesignal TxD entspricht. Das Kommunikationssteuermodul 113, genauer gesagt der Protokoll-Controller 1133, gibt das Signal TxD_PRT an das Schnittstellenmodul 15 aus.

Das Signal RxD_PRT ist ein Eingangssignal, das dem Empfangssignal RxD entspricht. Das Kommunikationssteuermodul 113, genauer gesagt der Protokoll-Controller 1133, empfängt das Signal RxD_PRT von dem Schnittstellenmodul 15. Alternativ empfängt das Kommunikationssteuermodul 113, genauer gesagt der Protokoll-Controller 1133, das Signal RxD_PRT direkt von dem zweiten Anschluss 112.

Zusätzlich zu diesen Signalen ist das Kommunikationssteuermodul 113 ausgestaltet, ein Steuersignal TC_MD zu erzeugen und auszugeben. Das Steuersignal TC_MD gibt an, ob die Sende-/Empfangseinrichtung 12 in der Datenphasenbetriebsart 453_B betrieben werden soll oder nicht.

In der Datenphase 453 kann die Sende-/Empfangseinrichtung 12 in der Betriebsart 453_TX bzw. TX-DataPhaseMode arbeiten. Die Betriebsart 453_TX wird auch FAST_TX Mode oder erste Betriebsart genannt. In der Betriebsart 453_TX bzw. TX-DataPhaseMode hat die Teilnehmerstation 10 die Arbitration in der Arbitrationsphase 451 gewonnen und ist in der darauffolgenden Datenphase 453 Sender des Rahmens 450. Die Teilnehmerstation 10 kann in diesem Fall auch als Sendeknoten bezeichnet werden. Alternativ kann die Sende-/Empfangseinrichtung 12 in der Datenphase 453 in der Betriebsart 453_RX bzw. RX-DataPhaseMode arbeiten. Die Betriebsart wird auch FAST_RX Mode oder zweite Betriebsart genannt. In der Betriebsart 453_RX bzw. RX-DataPhaseMode hat die Teilnehmerstation 10 die Arbitration in der Arbitrationsphase 451 verloren und ist in der darauffolgenden Datenphase 453 nur Empfänger, also kein Sender, des Rahmens 450. Die Teilnehmerstation 10 kann in diesem Fall auch als Empfangsknoten bezeichnet werden.

Die Schaltung zur Signalisierung der einzuschaltenden Betriebsart an die Sende-/Empfangseinrichtung 12 ist mit dem Schnittstellenmodul 15 ausgeführt, wie nachfolgend erläutert.

Das Schnittstellenmodul 15 hat mindestens ein Konfigurationsregister 151, 152, 153, 154 zum Speichern von Parametern für eine Konfiguration und Ausgabe bei Bedarf. Das mindestens eine Konfigurationsregister 151, 152, 153, 154 ist beispielsweise ein PWM-Bitratenvorteilerregister 151 bzw. PWM-BRP-Register 151, ein PWM-Offset-Konfigurationsregister 152, ein PWM-Phase1-Konfigurationsregister 153, ein PWM-Phase2-Konfigurationsregister 154. Selbstverständlich ist es möglich, dass mindestens eines der Konfigurationsregister 151, 152, 153, 154 oder mindestens ein zusätzliches anderes Konfigurationsregister für andere Konfigurationsparameter. Das Schnittstellenmodul 15 hat zudem einen Taktteilerblock 155 bzw. Prescaler-Block, einen Modulator 156 und einen Multiplexer 157.

Das Schnittstellenmodul 15 empfängt die zuvor genannten Signale, welche das Kommunikationssteuermodul 113 ausgibt. Außerdem empfängt das Schnittstellenmodul 15, genauer gesagt sein Taktteilerblock 155, das Taktsignal CAN_CLK.

Somit arbeitet das Schnittstellenmodul 15 mit dem gleichen Takt CAN_CLK wie das Kommunikationssteuermodul 113, genauer gesagt der Protokoll-Controller 1133. Mit den Parametern in den konfigurierbaren Konfigurationsregistern 151 bis 154 ist eine von dem Modulator 155 ausgeführte Modulation konfigurierbar. Die Konfigurationsparameter der Konfigurationsregistern 153 bis 155 erlauben, dass die Bitlängen (Bitzeiten bzw. Bitdauern) in der Arbitrationsphase 451 und Datenphase 453 eines Rahmens 450 unabhängig voneinander sein können. Der Modulator 155 kann somit das Signal TxD_PRT zumindest zeitweise modulieren, insbesondere mit Puls-Weiten-Modulation. Der Modulator 155 gibt das gemäß den Konfigurationsparametern der Konfigurationsregister 151 bis 154 erzeugte Sendesignal TxD_PWM an den Multiplexer 157 aus.

Der Multiplexer 157 wird von dem Kommunikationssteuermodul 113 gesteuert, genauer gesagt dem Protokoll-Controller 1133. Je nach Steuerung durch das Kommunikationssteuermodul 113, genauer gesagt den Protokoll-Controller 1133, gibt der Multiplexer 157 das modulierte Signal TxD-PWM oder das nicht modulierte Signal TxD-PRT über den Ausgangsanschluss 111 an die Sende-/Empfangseinrichtung 12 aus.

Hierbei gilt, das Kommunikationssteuermodul 113, genauer gesagt der Protokoll-Controller 1133, steuert den Multiplexer 157 außerhalb der Datenphase 453, insbesondere in der Arbitrationsphase 451, derart, dass das Signal TxD_PRT direkt an die Sende-/Empfangseinrichtung 12 weitergegeben wird. In der Datenphase 453 steuert das Kommunikationssteuermodul 113, genauer gesagt der Protokoll-Controller 1133, den Multiplexer 157 derart, dass das Schnittstellenmodul 15 ein moduliertes Signal TxD_PWM an die Sende-/Empfangseinrichtung 12 weitergibt.

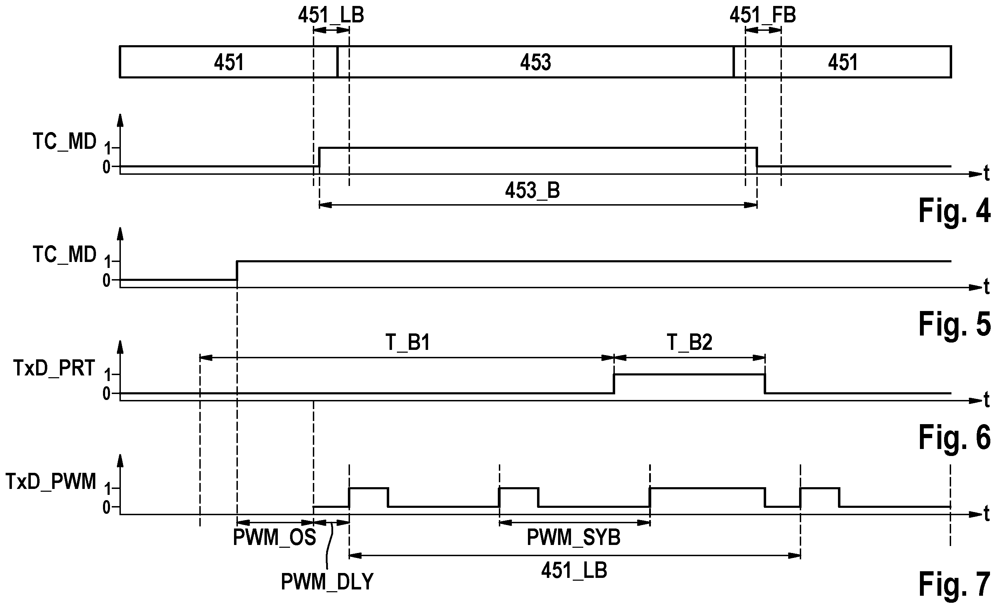

Fig. 4 zeigt das Steuersignal TC_MD, welches angibt, ob die Sende-/Empfangseinrichtung 12 in der Datenphasenbetriebsart 453_B betrieben werden soll oder nicht. Das Steuersignal TC_MD wechselt hierfür im letzten Bit 451_LB der Arbitrationsphase 451 seinen Pegel. Bei dem Beispiel von Fig. 4 schaltet das Steuersignal TC_MD im letzten Bit 451_LB der Arbitrationsphase 451 von seinem Pegel 0 auf den Pegel 1. Das Steuersignal TC_MD wechselt dann erst in dem ersten Bit 451_FB der nächsten Arbitrationsphase 451 wieder seinen Pegel. Bei dem Beispiel von Fig. 4 schaltet das Steuersignal TC_MD im ersten Bit 451_FB der nächsten Arbitrationsphase 451 von dem Pegel 1 auf den Pegel 0.

Somit kennzeichnet das Steuersignal TC_MD gemäß dem Beispiel von Fig. 4 mit dem Wert ,1', dass die Sende-/Empfangseinrichtung 12 in der Betriebsart 453_B der Datenphase 453 betrieben werden soll. Mit dem Wert ,0' kennzeichnet das Steuersignal TC_MD gemäß dem Beispiel von Fig. 4, dass die Sende-/Empfangseinrichtung 12 in der Betriebsart 453_1 der Arbitrationsphase 451 betrieben werden soll.

Mit anderen Worten, die Betriebsart 453_B der Datenphase 453 der Sende-/Empfangseinrichtung 12 beginnt bereits im letzten Bit 451_LB der Arbitrationsphase 451, hält für die Dauer der Datenphase 453 des Rahmens 450 an, und endet erst im ersten Bit 451_FB der folgenden Arbitrationsphase 451, wie in Fig. 4 gezeigt. Die Bitrate des Protokoll-Controller 1133 und die Betriebsart bzw. der Physical Layer der Sende-/Empfangseinrichtung 12 werden also nicht gleichzeitig umgeschaltet.

Fig. 5 zeigt das Steuersignal TC_MD bei dem Umschalten von der Arbitrationsphase 451 in die Datenphase 453. Gemäß dem Beispiel von Fig. 6 wird somit in dem Sendesignal TxD_PRT zunächst noch ein Bit mit der Bitdauer bzw. Bitzeit T_B1 der Arbitrationsphase 451 gesendet, innerhalb dieses Bits wird die Betriebsart der Sende-/Empfangseinrichtung 12, insbesondere die Betriebsart ihres Sende-/Empfangsmoduls 123, umgeschaltet. Anschließend folgen in der Datenphase 453 Bits mit der Bitdauer bzw. Bitzeit T_B2. Bei dem Beispiel von Fig. 6 sind die Bits mit der Bitdauer T_B1 länger als die Bits mit der Bitdauer bzw. Bitzeit T_B2. Somit werden die Bits bzw. die Daten in der Datenphase 453 schneller gesendet und über den Bus 40 übertragen als in der Arbitrationsphase 451. Je nach Belieben sind in den Konfigurationsregistern 151 bis 154 jedoch anderen Werte zum Ableiten der Bitdauern bzw. Bitzeiten T_B1, T_B2 einstellbar, wie zuvor und nachfolgend beschrieben.

Wie in Fig. 6 gezeigt, ist das Signal TxD_PRT am Ausgang des Protokoll-Controllers 1133 NRZ-codiert (N RZ = Non-Return-to-Zero). Dadurch ist das Signal TxD_PRT eine Bitzeit lang stabil. Flanken treten erst auf, wenn das Signal seinen Pegel (Zustand) wechselt, also von 0 nach 1 wechselt oder von 1 nach 0 wechselt.

Wenn die Einrichtung 11 der Sende-/Empfangseinrichtung 12 signalisieren soll, dass die Sende-/Empfangseinrichtung 12 in die Betriebsart 453_B für die Datenphase 453, insbesondere von Rahmen 450, umzuschalten hat, wird der Modulator 156 eingesetzt. Der Modulator 156 ist ausgestaltet eine Puls-Weiten-Modulation (PWM) des Sendesignals TxD_PRT des Protokoll-Controllers 1133 durchzuführen. Wie bereits zuvor erwähnt, gibt der Modulator 156 ein Signal TxD_PWM aus, wie beispielsweise in Fig. 7 gezeigt. Das Signal TxD_PWM hat einen zeitlichen Versatz (Offset) PWM_OS und eine Modulationsverzögerung PWM_DLY, die später noch genauer beschrieben sind. In dem letzten Bit 451_LB der Arbitrationsphase 451 ist mit Symbolen PWM_SYB die Information für die Sende-/Empfangseinrichtung 12 enthalten, in welche Betriebsart 453_B die Sende-/Empfangseinrichtung 12, insbesondere ihr Sende-/Empfangsmodul 123, umschalten soll.

Bei dem Beispiel von Fig. 7 haben die Symbole PWM_SYB eine Zeitdauer von etwa einer Bitdauer bzw. Bitzeit T_B2 der Datenphase 453. Zudem sind drei Symbole PWM_SYB in dem letzten Bit 451_LB der Arbitrationsphase 451 enthalten. Die Symbole PWM_SYB signalisieren unterschiedliche Werte. Somit können der Sende-/Empfangseinrichtung 12 zusätzlich zu den verschiedenen Betriebsarten 453_B für die Datenphase 453 noch andere Informationen signalisiert werden.

Die Sende-/Empfangseinrichtung 12, insbesondere ihr Sende-/Empfangsmodul 123, ist ausgestaltet, das modulierte Signal TxD_PWM zu demodulieren und die Modulierung in dem resultierenden modulierten Signal TxD_PWM zu erkennen.

Je nach den Informationen in dem modulierten Signal TxD_PWM wird die Sende-/Empfangseinrichtung 12, insbesondere ihr Sende-/Empfangsmodul 123, ihre Betriebsart umschalten. Außerdem ist die Sende-/Empfangseinrichtung 12, insbesondere ihr Sende-/Empfangsmodul 123, ausgestaltet, das demodulierte Signal TxD_TC auf den Bus 40 zu senden, wenn die Sende-/Empfangseinrichtung 12, insbesondere ihr Sende-/Empfangsmodul 123, in die Betriebsart 453_TX zu schalten ist (Sendeknoten). Ist die Teilnehmerstation 10 in der Datenphase 453 nur Empfänger (Empfangsknoten), wie zuvor beschrieben ist, wird die Sende-/Empfangseinrichtung 12, insbesondere ihr Sende-/Empfangsmodul 123, nur ihren Eingangskomparator auf die Betriebsart 453_RX umstellen. Hierbei wird/werden die Empfangsschwelle(n) des Eingangskomparators auf andere Empfangspegel umgestellt. Die Einstellungen an der Sende-/Empfangseinrichtung 12 zum Senden müssen jedoch nicht geändert werden.

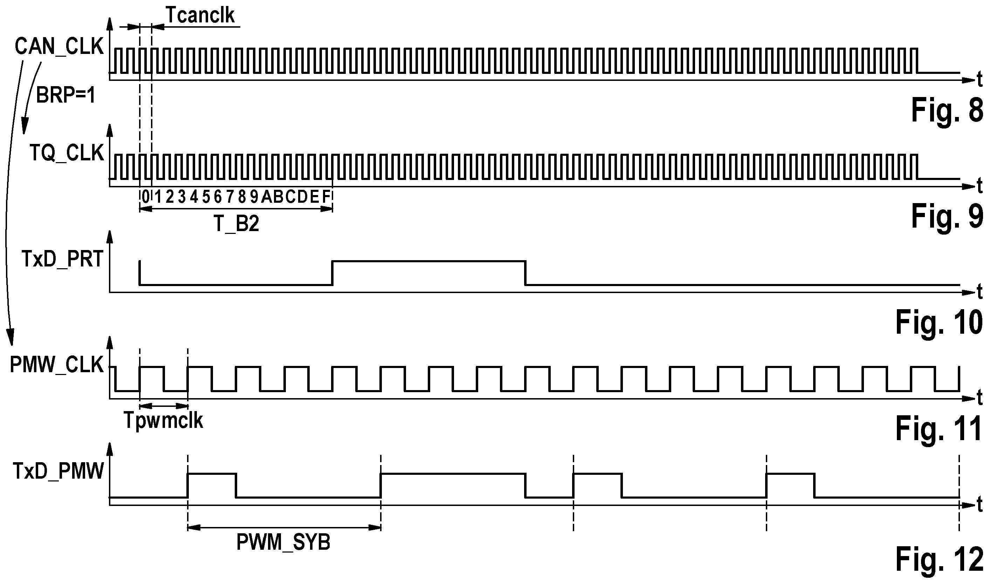

Fig. 8 bis Fig. 10 veranschaulichen die Funktionsweise des Modulators 156, um das modulierte Signal TxD_PWM von Fig. 7 zu erzeugen.

Gemäß Fig. 8 hat das Taktsignal CAN_CLK eine Taktperiode Tcanclk. Da bei dem Beispiel von Fig. 9 in dem Register 151 ein BRP = 1 gewählt ist, ist eine Taktperiode Tcanclk gleich einer Taktperiode des Zeitquantentaktsignals TQ_CLK. Das Zeitquantentaktsignal TQ_CLK gibt für eine Bitzeit T_B1 in der Arbitrationsphase 451 beispielsweise 16 Zeitquanten TQ vor, wie in Zusammenschau mit Fig. 10 für das Signal TxD_PRT ersichtlich. Somit ist jedes Bit des Signals TxD_PRT in 16 Zeitquanten TQ unterteilt.

Gemäß dem Beispiel von Fig. 11 erzeugt der Taktteilerblock 155 mit einem Einstellparameter = 4 ein PWM-Taktsignal PWM_CLK mit einer Taktperiode Tpwmclk. Somit gilt bei dem Beispiel von Fig. 8 bis Fig. 11, Tpwmclk = 4 * Tcanclk.

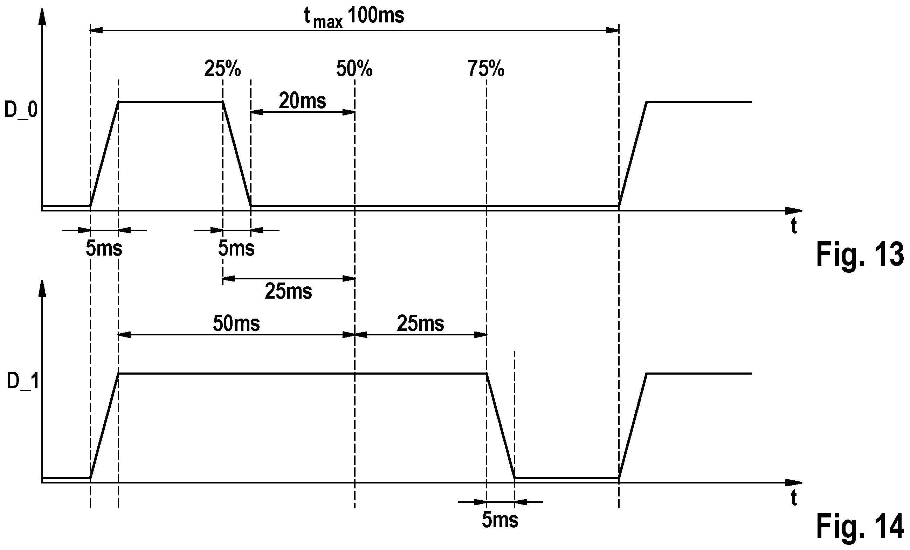

Unter Verwendung dieses PWM-Taktsignals PWM_CLK erzeugt der Modulator 156 beispielsweise das modulierte Sendesignal TxD_PWM von Fig. 12. Hierin sind die Zustände D_0 des digitalen Signals TxD_PWM gemäß dem Prinzip von Fig. 13 erzeugt. Die Zustände D_1 des digitalen Signals TxD_PWM sind gemäß dem Prinzip von Fig. 14 erzeugt.

Bei dem Beispiel von Fig. 12 gibt es zwei PWM-Symbole fester Länge, die jeweils in eine Phase1 (High-Phase) und eine Phase2 (Low-Phase) unterteilt sind, wie auch in Fig. 13 und Fig. 14 veranschaulicht. Eine digitale ,0' wird in Fig. 13 beispielsweise als kurze High-Phase und lange Low-Phase dargestellt (D_0). Bei der digitalen ,1' ist es umgekehrt. Somit wird die digitale ,1' in Fig. 14als kurze Low-Phase und lange High-Phase dargestellt (D_1).

Ist das gesamte Symbol PWM_SYB beispielsweise vier Takte lang ist, sind die Phase1, Phase2 von Fig. 13 und Fig. 14 entweder 1 oder 3 Takte bzw. Taktperioden Tpwmclk lang. Die Länge der Phase1 ist in dem PWM-Phase1-Konfigurationsregister 153 einstellbar. Die Länge der Phase1 ist in dem PWM-Phase2-Konfigurationsregister 154 einstellbar.

Auf diese Weise kann eine CAN Bitzeit T_B1 oder T_B2 als ein einzelnes Symbol PWM_SYB oder als mehrere Symbole PWM_SYB übertragen werden. Eine Bitzeit T_B1 oder T_B2 muss immer ein ganzzahliges Vielfaches der Symbol-Länge eines Symbols PWM_SYB sein. Somit wird durch Konfiguration der Längen der Phase1, Phase2 in den Registern 153, 154 auch letztlich die Länge der Bitzeiten T_B1, T_B2 eingestellt. Das Schnittstellenmodul 15 arbeitet mit demselben Takt wie der Protokoll-Controller 1133.

Es gibt verschiedene Optionen, wie die Symbole PWM_SYB konfiguriert werden können. Gemäß einer ersten Option werden die Phase1, Phase2 des Symbols PWM_SYB getrennt konfiguriert.

Gemäß einer zweiten Option wird die Symbollänge und die Länge einer der beiden Phasen Phase1, Phase2 des Symbols PWM_SYB konfiguriert. Die andere Phase wird dann als die Differenz der beiden konfigurierten Längen berechnet.

Selbstverständlich sind andere Konfigurationen oder Register 151 bis 154 möglich, um die vorstehend beschriebene Modulation des Modulators 156 durchzuführen.

Ein zusätzlicher Konfigurationsparameter ist der Versatz PWM OS gemäß Fig. 7. Dieser Konfigurationsparameter ist ein Versatz (Offset) in Takt-Perioden des Taktsignals PWM_CLK Tpwmclk. Der Versatz PWM OS dient dazu, die Modulation des Signals TxD_PRT zeitverzögert derart zu starten, dass die Phasenverschiebung zwischen den Bits des Signals TxD_PRT in der Datenphase 453 und den Symbolen PWM_SYB auf dem modulierten Sendesignal TxD_PWM minimiert wird, wie in Fig. 7 gezeigt.

Der große Vorteil des konfigurierbaren Versatzes PWM OS ist, dass die Konfiguration des Versatzes PWM OS auch einen Phasensprung ausgleichen kann, der entstehen würde, wenn die Bitzeit T_B1 der Arbitrationsphase 451 nicht ein ganzzahliges Vielfaches der Bitzeit T_B2 in der Datenphase 453 ist. Folglich sind die beiden Bitzeiten T_B1, T_B2 für einen Benutzer des Moduls 15 und der Kommunikationssteuereinrichtung 11 bzw. der Teilnehmerstation 10 beliebig einstellbar. Damit bietet das Modul für die Teilnehmerstation 10 volle Flexibilität.

Die Konfigurationsregister 151 bis 154 erlauben die Optimierung der Modulationsparameter im Betrieb der Teilnehmerstation 10.

Gemäß einer ersten Modifikation der zuvor genannten Ausgestaltung der Module 15, 16 ist es möglich, dass mindestens eines der Module 15, 16 nur eine Schaltung in die Betriebsart 453_TX bzw. TX-DataPhaseMode ermöglicht. Eine solche Variante kann beispielsweise bei einer Teilnehmerstation 10, 20 des Bussystems 1 vorteilhaft sein, die selbst nur Signale senden muss, jedoch keine Signale vom Bus 40 empfangen muss, um ihre Funktion auszuführen. Beispiel für die Ausgestaltung einer solchen Teilnehmerstation ist ein reines Steuerglied, dessen Steuerung zwar über den Bus 40 übertragen wird, jedoch das Ereignis für die Steuerung unabhängig von der Kommunikation am Bus empfängt oder erzeugt.

Gemäß einer zweiten Modifikation der zuvor genannten Ausgestaltung der Module 15, 16 ist es möglich, dass mindestens eines der Module 15, 16 nur eine Schaltung in die Betriebsart 453_RX bzw. RX-DataPhaseMode ermöglicht. Eine solche Variante kann beispielsweise bei einer Teilnehmerstation 10, 20 des Bussystems 1 vorteilhaft sein, die selbst keine Signale senden muss, sondern nur Signale vom Bus 40 empfangen muss, um ihre Funktion auszuführen. Beispiel für die Ausgestaltung einer solchen Teilnehmerstation ist ein Geber, insbesondere Drehgeber, Stellglied usw..

Selbstverständlich sind die zuvor beschriebenen Funktionen der Einrichtungen 11, 12 auch für eine Modifikation von CAN FD und/oder CAN, zumindest für das Senden der Nutzdaten, verwendbar.

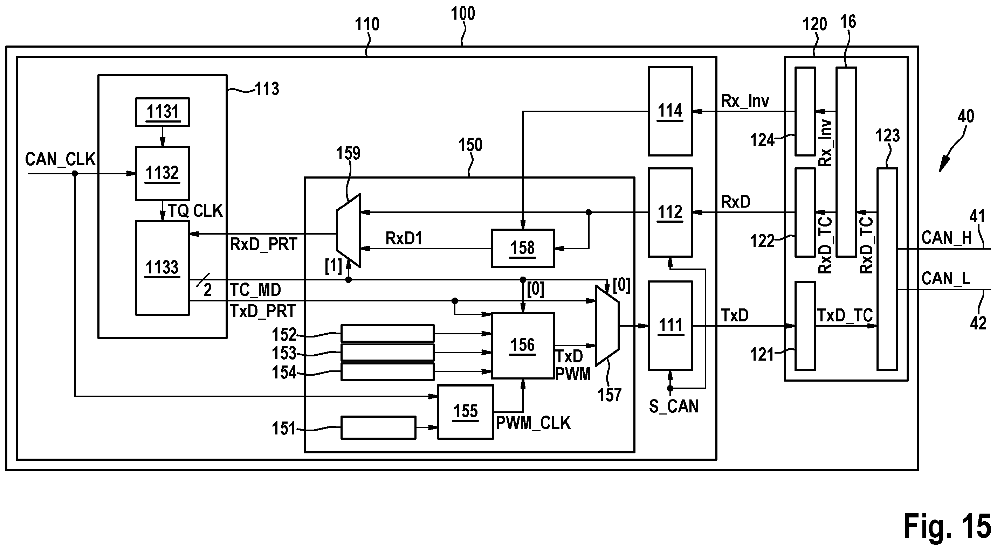

Fig. 15 zeigt den grundlegenden Aufbau einer Teilnehmerstation 100 mit ihrer Kommunikationssteuereinrichtung 110 und ihrer Sende-/Empfangseinrichtung 120 sowie einem Schnittstellenmodul 150.

Der nachfolgend beschriebene Aufbau der Teilnehmerstation 100 stellt eine robuste und einfache Möglichkeit bereit, Bits von Signalen zwischen der Kommunikationssteuereinrichtung 110 und der Sende-/Empfangseinrichtung 120 symmetrisch zu übertragen. Dies ist insbesondere während der Übertragung von Daten während der Datenphase 453 eines Rahmens 450 von Vorteil.

Im Unterschied zu der Teilnehmerstation 10 hat die Kommunikationssteuereinrichtung 110 zusätzlich einen dritten Anschluss 114. Der Anschluss 114 ist ein Eingangsanschluss. Optional ist der Anschluss 114 ein Anschluss, der entweder als Eingang oder als Ausgang schaltbar ist.

Die Sende-/Empfangseinrichtung 120 hat zusätzlich zu der Sende-/Empfangseinrichtung 12 des vorangehenden Ausführungsbeispiels einen Codierblock 16, der zwischen Anschlüsse 121, 122, 124 und das Sende-/Empfangsmodul 123 geschaltet ist. Somit hat die Sende-/Empfangseinrichtung 120 zusätzlich einen dritten Anschluss 124. Der Anschluss 124 ist ein Ausgangsanschluss. Optional ist der Anschluss 124 ein Anschluss, der entweder als Eingang oder als Eingang schaltbar ist. Der Codierblock 16 kann ausgestaltet sein, die Übertragungsrichtung des dritten Anschlusses abhängig von der Betriebsart zu wählen, in welche die Sende-/Empfangseinrichtung in der zweiten Kommunikationsphase geschaltet ist.

Das Schnittstellenmodul 150 hat zusätzlich zu dem Schnittstellenmodul 15 des vorangehenden Ausführungsbeispiels einen Decodierblock 158 und einen Multiplexer 159.

Das Empfangssignal RxD_TC der Sende-/Empfangseinrichtung 120 wird über die Anschlüsse 122, 124, die auch RxD und Rx_Inv genannt werden können, als Differenzsignal an die Einrichtung 11 ausgegeben. Rx_Inv hat immer den inversen Wert des Signals RxD_TC. Aus den beiden Signalen RxD, Rx_Inv in dem Schnittstellenmodul 150 wird dann wieder ein einzelnes digitales Signal RxD1 decodiert.

Durch die Ausgestaltung der Teilnehmerstation 10, kann das Sende-/Empfangsmodul 123 einen von dem Bus 40 empfangenen Rahmen 450 als differentielles Signal RxD, Rx_Inv über die Anschlüsse 122, 124, 112, 114 an das Kommunikationssteuermodul 113 senden. Somit kann das Kommunikationssteuermodul 113 einen über den Bus 40 gesendeten Rahmen 450 als differentielles Signal über die Anschlüsse 111, 112 empfangen, wie nachfolgend genauer beschrieben.

Der Codierblock 16 erzeugt aus einem Signal RxD_TC, also dem Empfangssignal RxD, ein Signal Rx_Inv. Das Signal Rx_Inv ist ein inverses Signal zu dem Signal RxD_TC. Der Codierblock 16 gibt das Signal Rx_Inv an den Anschluss 124 aus. Dadurch kann die Sende-/Empfangseinrichtung 12 über die Anschlüsse 122, 124 die Signale RxD, Rx_Inv als ein differentielles Ausgangssignal an die Kommunikationssteuereinrichtung 11 ausgeben. Im einfachsten Fall ist der Codierblock 16 ein Inverter, der das Signal RxD_TC invertiert.

Der Decodierblock 158 des Schnittstellenmoduls 150 ist an seinem Eingang mit Anschlüssen 112, 114 verbunden. Der Decodierblock 158 empfängt von den Anschlüssen 112, 114 ein differentielles Eingangssignal, das aus dem Signal RxD und dem Signal Rx_Inv besteht. Der Decodierblock 158 decodiert die Signale RxD, Rx_Inv zu dem nicht-differentiellen Signal RxD1. Der Decodierblock 158 gibt das Signal RxD1 an den Multiplexer 159 aus.

Der Protokoll-Controller 1133 steuert den Multiplexer 159 mit dem Steuersignal TC_MD an. Je nach Signalwert des Steuersignals TC_MD wird ausgewählt, ob dem Protokoll-Controller 1133 das von dem Decodierblock 158 decodierte Signal RxD1.oder das Signal RxD von dem Anschluss 122 als Signal RxD_PRT bereitgestellt wird.

Optional sendet das Sende-/Empfangsmodul 123 das differentielle Signal RxD, Rx_Inv über die Anschlüsse 122, 124 nur in der Betriebsart 453_B der Datenphase 453 an die Kommunikationssteuereinrichtung 11.

Der Zweck dieser Übertragung als differentielles Signal ist es, die Signallaufzeiten für die beiden Signalflanken von 0 zu 1 und von 1 zu 0 auf dem Weg von dem Sende-/Empfangsmodul 123 über die Verbindungsleitungen zwischen den Einrichtungen 11, 12 sowie durch die Pad-Zellen der integrierten Schaltungen (ICs) möglichst symmetrisch zu halten. Eine hohe Symmetrie der Flanken soll verhindern, dass einer der beiden Buspegel durch asymmetrische Laufzeiten so stark verkürzt wird, dass er nicht mehr sicher abgetastet werden kann.

Je nach Anwendung können die beiden Multiplexer 157, 159 von demselben Signal, insbesondere von dem Steuersignal TC_MD, oder von zwei unterschiedlichen Signalen angesteuert werden.

Ansonsten kann die Kommunikation in den Teilnehmerstationen 10, 30 und in dem Bussystem 1 erfolgen, wie in Bezug auf das erste Ausführungsbeispiel beschrieben.

Gemäß einem dritten Ausführungsbeispiel wird für die Anschlüsse 114, 124 jeweils ein STB-Anschluss verwendet, der an den Einrichtungen 110, 120 zum Senden eines Betriebsart-Signalisierungssignals an die Sende-/Empfangseinrichtung 120 vorgesehen ist.

In diesem Fall kann die Einrichtung 110, wenn keine CAN XL Kommunikation stattfindet, den STB Anschluss treiben, um der Sende-/Empfangseinrichtung 120 zu signalisieren, dass die Sende-/Empfangseinrichtung in einen Wartezustand (Standby) oder wieder zurück in den aktiven Zustand zu schalten ist. In dem Wartezustand findet keine Kommunikation am Bus 40 statt. Im aktiven Zustand betreibt die Einrichtung 110 den Anschluss STB als Eingang, die Sende-/Empfangseinrichtung verwendet den Anschluss dann zur differentiellen Übertragung des RxD_TC Signals. Somit kann die Einrichtung 110 der Sende-/Empfangseinrichtung signalisieren, in welche Betriebsart oder Zustand die Sende-/Empfangseinrichtung abhängig von der Kommunikation auf dem Bus zu schalten ist.

Als Folge der Ausgestaltung der Teilnehmerstation 100 ist keine galvanische Verbindung durch jeweils einen zusätzlichen Anschluss an der Kommunikationssteuereinrichtung 110 und der damit verbundenen Sende-/Empfangseinrichtung 120 erforderlich, damit die Kommunikationssteuereinrichtung 110 der Sende-/Empfangseinrichtung 120 signalisieren kann, dass die Umschaltung in eine andere Betriebsart der Sende-/Empfangseinrichtung 120 vorzunehmen ist. Außerdem ist auch kein zusätzlicher Anschluss an der Kommunikationssteuereinrichtung 110 und der damit verbundenen Sende-/Empfangseinrichtung 120 erforderlich, damit die Symmetrie der Datenübertragung zwischen den Einrichtungen 110, 120 gewährleistet werden kann. Das heißt, es ist vorteilhaft kein zusätzlicher Anschluss erforderlich, der an einem Standardgehäuse der Einrichtungen 110, 120 nicht verfügbar ist. Ein Wechsel auf ein anderes, größeres und kostenintensives, Gehäuse ist somit nicht notwendig, um einen zusätzlichen Anschluss bereitzustellen.

Durch die beschriebene Ausgestaltung der Einrichtung(en) 110, 120, 0 können in der Datenphase 453 weit höhere Datenraten als mit CAN oder CAN-FD erreicht werden. Zudem kann die Datenlänge in dem Datenfeld der Datenphase 453 beliebig gewählt werden, wie zuvor beschrieben. Dadurch können die Vorteile von CAN in Bezug auf die Arbitrierung beibehalten und dennoch eine größere Anzahl von Daten in kürzerer Zeit als bisher sehr sicher und damit effektiv übertragen werden, das heißt, ohne dass eine Wiederholung der Daten aufgrund eines Fehlers notwendig wäre.

Ansonsten kann die Kommunikation in den Teilnehmerstationen 10, 30 und in dem Bussystem 1 erfolgen, wie in Bezug auf das erste oder zweite Ausführungsbeispiel beschrieben.

Alle zuvor beschriebenen Ausgestaltungen der Einrichtungen 11, 12, 31, 32, der Module 15, 16, 35, der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist das zuvor beschriebene Prinzip der Erfindung bei Schnittstellen verwendbar, welche für verschiedene Kommunikationsphasen ein Umschaltsignal von einem Protokoll-Controller bzw. Modul 113 benötigen und/oder dabei einen Datenaustausch zwischen Einrichtungen 11, 12 benötigen.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Schnittstellenmodul (15; 150) für eine Kommunikationssteuereinrichtung (11; 110) einer Teilnehmerstation (10) eines seriellen Bussystems (1), mit
mindestens einem Konfigurationsregister (151 bis 154) zur Konfiguration der Bitzeit (T_B1) einer ersten Kommunikationsphase (451, 452, 454, 455) eines Rahmens (450) und/oder der Bitzeit (T_B2) einer zweiten Kommunikationsphase (453) des Rahmens (450), mit dem Nachrichten (45; 46) zwischen Teilnehmerstationen (10, 20, 30) des Bussystems (1) ausgetauscht werden, und
einem Modulator (156) zur Modulation eines digitalen Sendesignals (TxD_PRT) in ein moduliertes digitales Sendesignal (TxD_PWM), das die in dem mindestens einen Konfigurationsregister (151 bis 154) konfigurierte Bitzeit (T_B2) der zweiten Kommunikationsphase (453) hat, die sich von der Bitzeit (T_B1) der ersten Kommunikationsphase (451, 452, 454, 455) unterscheidet,
wobei das Schnittstellenmodul (15; 150) ausgestaltet ist, in der ersten Kommunikationsphase (451, 452, 454, 455) das in den Modulator (156) eingegebene digitale Sendesignal (TxD_PRT) an eine Sende-/Empfangseinrichtung (12; 120) der Teilnehmerstation (10) auszugeben, um das digitale Sendesignal (TxD_PRT) mit der Sende-/Empfangseinrichtung (12; 120) in Signale (CAN_H, CAN_L) für Busadern (41, 42) eines Busses (40) des Bussystems (1) umzusetzen und die Signale (CAN_H, CAN_L) auf den Bus (40) zu senden, und
wobei das Schnittstellenmodul (15; 150) ausgestaltet ist, in der zweiten Kommunikationsphase (453) das von dem Modulator (156) erzeugte modulierte digitale Sendesignal (TxD_PWM) an die Sende-/Empfangseinrichtung (12; 120) der Teilnehmerstation (10) auszugeben, um das modulierte digitale Sendesignal (TxD_PWM) mit der Sende-/Empfangseinrichtung (12; 120) in Signale (CAN_H, CAN_L) für die Busadern (41, 42) des Busses (40) des Bussystems (1) umzusetzen und die Signale (CAN_H, CAN_L) auf den Bus (40) zu senden,
wobei der Modulator (156) zur Puls-Weiten-Modulation des Sendesignals (TxD_PRT) ausgestaltet ist, und
wobei der Modulator (156) ausgestaltet ist, als Parameter für die Puls-Weiten-Modulation einen Modulationsversatz (PWM_OS) zu verwenden, den das mindestens eine Konfigurationsregister (152) aufweist.

2. Schnittstellenmodul (15; 150) nach Anspruch 1, zudem mit einem ersten Multiplexer (157) zum Empfang eines Steuersignals (TC_MD) von der Kommunikationssteuereinrichtung (11; 110) und zum Empfang des Sendesignals (TxD_PRT) und des modulierten Sendesignals (TxD_PWM) sowie zur Ausgabe des Sendesignals (TxD_PRT) oder des modulierten Sendesignal (TxD_PWM) in Abhängigkeit von dem Steuersignal (TC_MD) an die Sende-/Empfangseinrichtung (12; 120).

3. Schnittstellenmodul (15; 150) nach Anspruch 1 oder 2,
zudem mit einem Taktteilerblock (155) zum Erzeugen eines Taktsignals (PWM_CLK) auf der Grundlage eines Taktsignals (CAN_CLK), mit welchem die Kommunikationssteuereinrichtung (11; 110) das Sendesignal (TxD_PRT) erzeugt, und einem in dem mindestens einen Konfigurationsregister (151) konfigurierten Parameter,
wobei der Modulator (156) ausgestaltet ist, das modulierte Sendesignal (TxD_PWM) auf der Grundlage des von dem Taktteilerblock (155) erzeugten Taktsignals (PWM_CLK) zu erzeugen.

4. Schnittstellenmodul (150) nach einem der vorangehenden Ansprüche,
wobei das mindestens eine Konfigurationsregister (153, 154) für die Puls-Weiten-Modulation des Modulators (156) mindestens zwei Parameter zur Bestimmung der Länge von zwei Phasen eines PWM-Symbols aufweist.

5. Schnittstellenmodul (150) nach einem der vorangehenden Ansprüche, zudem mit
einem Decodierblock (158) zum Empfang eines digitalen Empfangssignals (RxD_TC), das von der Sende-/Empfangseinrichtung (12; 120) aus einem vom Bus (40) empfangenen Signal (CAN_H, CAN_L) erzeugt wurde, und eines zu dem digitalen Empfangssignal (RxD_TC) inversen Empfangssignals (RxD_Inv) und zum Decodieren des resultierenden differentiellen Signals (RxD_TC, RxD_Inv) in ein nicht-differentielles Empfangssignal (RxD1), und
einem zweiten Multiplexer (159) zum Ausgeben des von dem Decodierblock (158) erzeugten nicht-differentiellen Signals (RxD1) an die Kommunikationssteuereinrichtung (110), wenn die Sende-/Empfangseinrichtung (12; 32; 120) in eine Betriebsart (453_B) der zweiten Kommunikationsphase (453) geschaltet ist.

6. Schnittstellenmodul (150) nach Anspruch 5, wobei das Schnittstellenmodul (150) derart ausgestaltet ist, dass der erste und zweite Multiplexer (154, 159) von demselben Steuersignal (TC_MD) gesteuert werden.

7. Kommunikationssteuereinrichtung (11; 110) für eine Teilnehmerstation (10) eines seriellen Bussystems (1), mit
einem Kommunikationssteuermodul (113) zum Erzeugen eines Sendesignals (TxD_PRT) zum Steuern einer Kommunikation der Teilnehmerstation (10) mit mindestens einer anderen Teilnehmerstation (10; 20; 30) des Bussystems (1), bei welchem Bussystem (1) zum Austausch von Nachrichten (45; 46) zwischen Teilnehmerstationen (10, 20, 30) des Bussystems (1) mindestens eine erste Kommunikationsphase (451, 452, 454, 455) und eine zweite Kommunikationsphase (453) verwendet werden, und
einem Schnittstellenmodul (15; 150) nach einem der vorangehenden Ansprüche,
wobei das Kommunikationssteuermodul (113) zudem zur Erzeugung und zur Ausgabe an das Schnittstellenmodul (15; 150) eines Steuersignals (TC_MC) ausgestaltet ist, das angibt, wann das von dem Modulator (156) erzeugte modulierte Sendesignal (TxD_PWM) an die Sende-/Empfangseinrichtung (12; 120) der Teilnehmerstation (10) auszugeben ist.

8. Kommunikationssteuereinrichtung (11; 110) nach Anspruch 7, wobei das Betriebsart-Signalisierungssignal (TC_MD) dem Schnittstellenmodul (15; 150) signalisiert, in welche Betriebsart (451_B; 453_B) die Sende-/Empfangseinrichtung (12; 32) abhängig von der Kommunikation auf dem Bus (40) zu schalten ist.

9. Kommunikationssteuereinrichtung (110) nach Anspruch 7 oder 8, zudem mit
einem ersten Anschluss (111) zum Senden des Sendesignals (TxD_PRT) an die Sende-/Empfangseinrichtung (120),
einem zweiten Anschluss (112) zum Empfangen eines digitalen Empfangssignals (RxD) von der Sende-/Empfangseinrichtung (120), und
einem dritten Anschluss (114) zum Empfangen eines zu dem digitalen Empfangssignal (RxD) inversen digitalen Empfangssignals (RxD) von der Sende-/Empfangseinrichtung (120) an einem STB-Anschluss (114), der zum Signalisieren eines Wartezustands an die Sende-/Empfangseinrichtung (120) vorgesehen ist, in dem keine Kommunikation am Bus (40) stattfindet.

10. Kommunikationssteuereinrichtung (11; 110) nach einem der Ansprüche 7 bis 9, wobei das Kommunikationssteuermodul (114) ausgestaltet ist, das Sendesignal (TxD_PRT) in der ersten Kommunikationsphase (451, 452, 454, 455) mit Bits mit einer ersten Bitzeit (T_B1) zu erzeugen, die um mindestens den Faktor 10 größer als eine zweite Bitzeit (T_B2) von Bits ist, die das Kommunikationssteuermodul (114) in der zweiten Kommunikationsphase (453) in dem Sendesignal (TxD_PRT) erzeugt.

11. Sende-/Empfangseinrichtung (12; 32; 120) für eine Teilnehmerstation (10; 30) eines seriellen Bussystems (1), mit
einem Sende-/Empfangsmodul (123) zum Senden eines digitalen Sendesignals (TxD_TC) umgesetzt in Signale (CAN_H, CAN_L) für Busadern (41, 42) eines Busses (40) des Bussystems (1), bei welchem Bussystem (1) zum Austausch von Nachrichten (45; 46) zwischen Teilnehmerstationen (10, 20, 30) des Bussystems (1) mindestens eine erste Kommunikationsphase (451, 452, 454, 455) und eine zweite Kommunikationsphase (453) verwendet werden, und zum Erzeugen eines digitalen Empfangssignals (RxD_TC) aus einem von dem Bus (40) empfangenen Signal,
einem ersten Anschluss (121) zum Empfang eines digitalen Sendesignals (TxD) von einer Kommunikationssteuereinrichtung (11; 31),
einem zweiten Anschluss (122) zum Senden des digitalen Empfangssignals (RxD_TC) an die Kommunikationssteuereinrichtung (11; 31),
einem Codierblock (16) zum Erzeugen eines zu dem digitalen Empfangssignal (RxD_TC) inversen Empfangssignals (Rx_Inv), und
einem dritten Anschluss (124) zum Senden des inversen Empfangssignals (Rx_Inv) an die Kommunikationssteuereinrichtung (11; 31).

12. Sende-/Empfangseinrichtung (120) nach Anspruch 11,
wobei das Sende-/Empfangsmodul (123) ausgestaltet ist, das Sendesignal (TxD_TC) als differentielles Signal (CAN_H, CAN_L) auf den Bus (40) zu senden, und
wobei der dritte Anschluss (124) ein von Eingang aus Ausgang umschaltbarer STB-Anschluss (124) ist, der zum Signalisieren eines Wartezustands an die Sende-/Empfangseinrichtung (120) vorgesehen ist, in dem keine Kommunikation am Bus (40) stattfindet.

13. Einrichtung (11; 12; 32; 110; 120) nach einem der Ansprüche 7 bis 12,
wobei das in der ersten Kommunikationsphase (451, 452, 454, 455) von dem Bus (40) empfangene Signal mit einem anderen Physical Layer erzeugt ist als das in der zweiten Kommunikationsphase (453) von dem Bus (40) empfangene Signal, und
wobei in der ersten Kommunikationsphase (451) ausgehandelt wird, welche der Teilnehmerstationen (10, 20, 30) des Bussystems (1) in der nachfolgenden zweiten Kommunikationsphase (453) einen zumindest zeitweise exklusiven, kollisionsfreien Zugriff auf den Bus (40) bekommt.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Kommunikationssteuereinrichtung (11; 31) nach einem der Ansprüche 7 bis 10 und 13 und eine Sende-/Empfangseinrichtung (12; 32; 110; 120) nach einem der Ansprüche 11 bis 13 aufweist.

15. Verfahren zur Kommunikation in einem seriellen Bussystem (1), wobei das Verfahren mit einer Teilnehmerstation (10; 30) für ein Bussystem (1) ausgeführt wird, bei welchem zum Austausch von Nachrichten (45; 46) zwischen Teilnehmerstationen (10, 20, 30) des Bussystems (1) mindestens eine erste Kommunikationsphase (451, 452, 454, 455) und eine zweite Kommunikationsphase (453) verwendet werden, wobei die Teilnehmerstation (10; 30) ein Schnittstellenmodul nach einem der Ansprüche 1 bis 6 verwendet, und wobei das Verfahren die Schritte aufweist
Modulieren, mit einem Modulator (156), eines digitalen Sendesignals (TxD_PRT) in ein moduliertes digitales Sendesignal (TxD_PWM), das eine in dem mindestens einen Konfigurationsregister (151 bis 154) konfigurierte Bitzeit (T_B2) der zweiten Kommunikationsphase (453) hat, die sich von der Bitzeit (T_B1) der ersten Kommunikationsphase (451, 452, 454, 455) unterscheidet,
Ausgeben, mit dem Schnittstellenmodul in der ersten Kommunikationsphase (451, 452, 454, 455), des in den Modulator (156) eingegebenen digitalen Sendesignals (TxD_PRT) an eine Sende-/Empfangseinrichtung (12; 120) der Teilnehmerstation (10; 100), um das digitale Sendesignal (TxD_PRT) mit der Sende-/Empfangseinrichtung (12; 120) in Signale (CAN_H, CAN_L) für Busadern (41, 42) eines Busses (40) des Bussystems (1) umzusetzen und die Signale (CAN_H, CAN_L) auf den Bus (40) zu senden, und
Ausgeben, mit dem Schnittstellenmodul in der zweiten Kommunikationsphase (453), des von dem Modulator (156) erzeugten modulierten Sendesignals (TxD_PWM) an die Sende-/Empfangseinrichtung (12; 120) der Teilnehmerstation (10; 100), um das modulierte digitale Sendesignal (TxD_PWM) mit der Sende-/Empfangseinrichtung (12; 120) in Signale (CAN_H, CAN_L) für die Busadern (41, 42) des Busses (40) des Bussystems (1) umzusetzen und die Signale (CAN_H, CAN_L) auf den Bus (40) zu senden,
wobei der Modulator (156) eine Puls-Weiten-Modulation des Sendesignals (TxD_PRT) ausführt, und
wobei der Modulator (156) als Parameter für die Puls-Weiten-Modulation einen Modulationsversatz (PWM_OS) verwendet, den das mindestens eine Konfigurationsregister (152) aufweist.

## Claims

1. Interface module (15; 150) for a communication control device (11; 110) of a subscriber station (10) of a serial bus system (1), having
at least one configuration register (151 to 154) for configuring the bit time (T_B1) of a first communication phase (451, 452, 454, 455) of a frame (450) and/or the bit time (T_B2) of a second communication phase (453) of the frame (450), with which messages (45; 46) are exchanged between subscriber stations (10, 20, 30) of the bus system (1), and
a modulator (156) for modulating a digital transmit signal (TxD_PRT) into a modulated digital transmit signal (TxD_PWM) having the bit time (T_B2) of the second communication phase (453), which is configured in the at least one configuration register (151 to 154) and differs from the bit time (T_B1) of the first communication phase (451, 452, 454, 455),
wherein the interface module (15; 150) is configured, in the first communication phase (451, 452, 454, 455), to output the digital transmit signal (TxD_PRT) input to the modulator (156) to a transmitting/receiving device (12; 120) of the subscriber station (10) in order to convert the digital transmit signal (TxD_PRT) into signals (CAN_H, CAN_L) for bus wires (41, 42) of a bus (40) of the bus system (1) using the transmitting/receiving device (12; 120) and to transmit the signals (CAN_H, CAN_L) onto the bus (40), and
wherein the interface module (15; 150) is configured, in the second communication phase (453), to output the modulated digital transmit signal (TxD_PWM) generated by the modulator (156) to the transmitting/receiving device (12; 120) of the subscriber station (10) in order to convert the modulated digital transmit signal (TxD_PWM) into signals (CAN_H, CAN_L) for the bus wires (41, 42) of the bus (40) of the bus system (1) using the transmitting/receiving device (12; 120) and to transmit the signals (CAN_H, CAN_L) onto the bus (40),
wherein the modulator (156) is designed for pulse-width modulation of the transmit signal (TxD_PRT), and
wherein the modulator (156) is configured to use, as a parameter for the pulse-width modulation, a modulation offset (PWM_OS) included in the at least one configuration register (152).

2. Interface module (15; 150) according to Claim 1, also having a first multiplexer (157) for receiving a control signal (TC_MD) from the communication control device (11; 110) and for receiving the transmit signal (TxD_PRT) and the modulated transmit signal (TxD_PWM) as well as for outputting the transmit signal (TxD_PRT) or the modulated transmit signal (TxD_PWM) to the transmitting/receiving device (12; 120) on the basis of the control signal (TC_MD).

3. Interface module (15; 150) according to Claim 1 or 2,
also having a clock divider block (155) for generating a clock signal (PWM_CLK) on the basis of a clock signal (CAN_CLK), with which the communication control device (11; 110) generates the transmit signal (TxD_PRT), and a parameter configured in the at least one configuration register (151),
wherein the modulator (156) is configured to generate the modulated transmit signal (TxD_PWM) on the basis of the clock signal (PWM_CLK) generated by the clock divider block (155).

4. Interface module (150) according to one of the preceding claims,
wherein the at least one configuration register (153, 154) for the pulse-width modulation of the modulator (156) has at least two parameters for determining the length of two phases of a PWM symbol.

5. Interface module (150) according to one of the preceding claims, also having
a decoding block (158) for receiving a digital receive signal (RxD_TC), which was generated by the transmitting/receiving device (12; 120) from a signal (CAN_H, CAN_L) received from the bus (40), and a receive signal (RxD_Inv) inverse to the digital receive signal (RxD_TC) and for decoding the resulting differential signal (RxD_TC, RxD_Inv) into a non-differential receive signal (RxD1), and
a second multiplexer (159) for outputting the non-differential signal (RxD1) generated by the decoding block (158) to the communication control device (110) when the transmitting/receiving device (12; 32; 120) is switched to an operating mode (453_B) of the second communication phase (453).

6. Interface module (150) according to Claim 5, wherein the interface module (150) is configured such that the first and second multiplexer (154, 159) are controlled by the same control signal (TC_MD).

7. Communication control device (11; 110) for a subscriber station (10) of a serial bus system (1), having
a communication control module (113) for generating a transmit signal (TxD_PRT) for controlling communication between the subscriber station (10) and at least one other subscriber station (10; 20; 30) of the bus system (1), in which bus system (1) at least a first communication phase (451, 452, 454, 455) and a second communication phase (453) are used to exchange messages (45; 46) between subscriber stations (10, 20, 30) of the bus system (1), and
an interface module (15; 150) according to one of the preceding claims,
wherein the communication control module (113) is also configured to generate, and output to the interface module (15; 150), a control signal (TC_MC) which specifies when the modulated transmit signal (TxD_PWM) generated by the modulator (156) should be output to the transmitting/receiving device (12; 120) of the subscriber station (10).

8. Communication control device (11; 110) according to Claim 7, wherein the operating mode signalling signal (TC_MD) signals to the interface module (15; 150) the operating mode (451_B; 453_B) to which the transmitting/receiving device (12; 32) should be switched depending on the communication on the bus (40).

9. Communication control device (110) according to Claim 7 or 8, also having
a first connection (111) for transmitting the transmit signal (TxD_PRT) to the transmitting/receiving device (120),
a second connection (112) for receiving a digital receive signal (RxD) from the transmitting/receiving device (120), and
a third connection (114) for receiving a digital receive signal (RxD) inverse to the digital receive signal (RxD) from the transmitting/receiving device (120) at an STB connection (114) which is provided for the purpose of signalling a waiting state, in which no communication takes place on the bus (40), to the transmitting/receiving device (120).

10. Communication control device (11; 110) according to one of Claims 7 to 9, wherein the communication control module (114) is configured to generate the transmit signal (TxD_PRT) in the first communication phase (451, 452, 454, 455) with bits having a first bit time (T_B1) which is at least a factor of 10 greater than a second bit time (T_B2) of bits generated by the communication control module (114) in the transmit signal (TxD_PRT) in the second communication phase (453).

11. Transmitting/receiving device (12; 32; 120) for a subscriber station (10; 30) of a serial bus system (1), having
a transmitting/receiving module (123) for transmitting a digital transmit signal (TxD_TC) converted into signals (CAN_H, CAN_L) for bus wires (41, 42) of a bus (40) of the bus system (1), in which bus system (1) at least a first communication phase (451, 452, 454, 455) and a second communication phase (453) are used to exchange messages (45; 46) between subscriber stations (10, 20, 30) of the bus system (1), and for generating a digital receive signal (RxD_TC) from a signal received from the bus (40),
a first connection (121) for receiving a digital transmit signal (TxD) from a communication control device (11; 31),
a second connection (122) for transmitting the digital receive signal (RxD_TC) to the communication control device (11; 31),
a coding block (16) for generating a receive signal (Rx_Inv) inverse to the digital receive signal (RxD_TC), and
a third connection (124) for transmitting the inverse receive signal (Rx_Inv) to the communication control device (11; 31).

12. Transmitting/receiving device (120) according to Claim 11,
wherein the transmitting/receiving module (123) is configured to transmit the transmit signal (TxD_TC) onto the bus (40) as a differential signal (CAN_H, CAN_L), and
wherein the third connection (124) is an STB connection (124) which can be switched from input to output and is provided for the purpose of signalling a waiting state, in which no communication takes place on the bus (40), to the transmitting/receiving device (120).

13. Device (11; 12; 32; 110; 120) according to one of Claims 7 to 12,
wherein the signal received from the bus (40) in the first communication phase (451, 452, 454, 455) is generated with a different physical layer than the signal received from the bus (40) in the second communication phase (453), and
wherein negotiation takes place in the first communication phase (451) in order to determine which of the subscriber stations (10, 20, 30) of the bus system (1) receives at least temporarily exclusive, collision-free access to the bus (40) in the subsequent, second communication phase (453).

14. Bus system (1) having
a bus (40), and
at least two subscriber stations (10; 20; 30) that are connected to one another via the bus (40) in such a way that they can communicate serially with one another and at least one subscriber station (10; 30) of which has a communication control device (11; 31) according to one of Claims 7 to 10 and 13 and a transmitting/receiving device (12; 32; 110; 120) according to one of Claims 11 to 13.

15. Method for communicating in a serial bus system (1), wherein the method is carried out using a subscriber station (10; 30) for a bus system (1), in which at least a first communication phase (451, 452, 454, 455) and a second communication phase (453) are used to exchange messages (45; 46) between subscriber stations (10, 20, 30) of the bus system (1), wherein the subscriber station (10; 30) uses an interface module according to one of Claims 1 to 6, and wherein the method has the steps of
using a modulator (156) to modulate a digital transmit signal (TxD_PRT) into a modulated digital transmit signal (TxD_PWM) having a bit time (T_B2) of the second communication phase (453), which is configured in the at least one configuration register (151 to 154) and differs from the bit time (T_B1) of the first communication phase (451, 452, 454, 455),
using the interface module, in the first communication phase (451, 452, 454, 455), to output the digital transmit signal (TxD_PRT) input to the modulator (156) to a transmitting/receiving device (12; 120) of the subscriber station (10; 100) in order to convert the digital transmit signal (TxD_PRT) into signals (CAN_H, CAN_L) for bus wires (41, 42) of a bus (40) of the bus system (1) using the transmitting/receiving device (12; 120) and to transmit the signals (CAN_H, CAN_L) onto the bus (40), and
using the interface module, in the second communication phase (453), to output the modulated transmit signal (TxD_PWM) generated by the modulator (156) to the transmitting/receiving device (12; 120) of the subscriber station (10; 100) in order to convert the modulated digital transmit signal (TxD_PWM) into signals (CAN_H, CAN_L) for the bus wires (41, 42) of the bus (40) of the bus system (1) using the transmitting/receiving device (12; 120) and to transmit the signals (CAN_H, CAN_L) onto the bus (40),
wherein the modulator (156) carries out pulse-width modulation of the transmit signal (TxD_PRT), and
wherein the modulator (156) uses, as a parameter for the pulse-width modulation, a modulation offset (PWM_OS) included in the at least one configuration register (152).

## Revendications

1. Module d'interface (15 ; 150) pour un dispositif de commande de communication (11 ; 110) d'une station d'abonné (10) d'un système de bus série (1), comprenant :
au moins un registre de configuration (151 à 154) pour configurer le temps de bit (T_B1) d'une première phase de communication (451, 452, 454, 455) d'une trame (450) et/ou le temps de bit (T_B2) d'une deuxième phase de communication (453) de la trame (450), au moyen desquels des messages (45 ; 46) sont échangés entre des stations d'abonnés (10, 20, 30) du système de bus (1), et
un modulateur (156) pour la modulation d'un signal d'émission numérique (TxD_PRT) en un signal d'émission numérique modulé (TxD_PWM), qui présente le temps de bit (T_B2) de la deuxième phase de communication (453), lequel est configuré dans au moins un registre de configuration (151 à 154) et diffère du temps de bit (T_B1) de la première phase de communication (451, 452, 454, 455),
dans lequel le module d'interface (15 ; 150) est conçu pour, dans la première phase de communication (451, 452, 454, 455), délivrer le signal d'émission numérique (TxD_PRT) entré dans le modulateur (156) à un dispositif d'émission/réception (12 ; 120) de la station d'abonné (10) afin de convertir le signal d'émission numérique (TxD_PRT) au moyen du dispositif d'émission/réception (12 ; 120) en signaux (CAN_H, CAN_L) pour des conducteurs de bus (41, 42) d'un bus (40) du système de bus (1) et d'émettre les signaux (CAN_H, CAN_L) sur le bus (40), et
dans lequel le module d'interface (15 ; 150) est conçu pour, dans la deuxième phase de communication (453), délivrer le signal d'émission numérique modulé (TxD_PWM) produit par le modulateur (156) au dispositif d'émission/réception (12 ; 120) de la station d'abonné (10) afin de convertir le signal d'émission numérique modulé (TxD_PWM) au moyen du dispositif d'émission/réception (12 ; 120) en signaux (CAN_H, CAN_L) pour les conducteurs de bus (41, 42) du bus (40) du système de bus (1) et d'émettre les signaux (CAN_H, CAN_L) sur le bus (40),
dans lequel le modulateur (156) est conçu pour effectuer une modulation de largeur d'impulsion du signal d'émission (TxD_PRT), et
dans lequel le modulateur (156) est conçu pour utiliser comme paramètre pour la modulation de largeur d'impulsion un décalage de modulation (PWM_OS) que possède ledit au moins un registre de configuration (152).

2. Module d'interface (15 ; 150) selon la revendication 1, comprenant en outre un premier multiplexeur (157) pour recevoir un signal de commande (TC_MD) du dispositif de commande de communication (11 ; 110) et pour recevoir le signal d'émission (TxD_PRT) et le signal d'émission modulé (TxD_PWM), ainsi que pour délivrer le signal d'émission (TxD_PRT) ou le signal d'émission modulé (TxD_PWM) en fonction du signal de commande (TC_MD) au dispositif d'émission/réception (12 ; 120).

3. Module d'interface (15 ; 150) selon la revendication 1 ou 2,
comprenant en outre un bloc diviseur d'horloge (155) pour produire un signal d'horloge (PWM_CLK) sur la base d'un signal d'horloge (CAN_CLK) avec lequel le dispositif de commande de communication (11 ; 110) produit le signal d'émission (TxD_PRT), et d'un paramètre configuré dans ledit au moins un registre de configuration (151),
dans lequel le modulateur (156) est conçu pour produire le signal d'émission modulé (TxD_PWM) sur la base du signal d'horloge (PWM_CLK) produit par le bloc diviseur d'horloge (155).

4. Module d'interface (150) selon l'une quelconque des revendications précédentes,
dans lequel ledit au moins un registre de configuration (153, 154), pour la modulation de largeur d'impulsion du modulateur (156), comprend au moins deux paramètres pour déterminer la longueur de deux phases d'un symbole PWM.

5. Module d'interface (150) selon l'une quelconque des revendications précédentes, comprenant en outre
un bloc de décodage (158) pour recevoir un signal de réception numérique (RxD_TC) qui a été produit par le dispositif d'émission/réception (12 ; 120) à partir d'un signal (CAN_H, CAN_L) reçu du bus (40), et un signal de réception inverse (RxD_Inv) par rapport au signal de réception numérique (RxD_TC), et pour décoder le signal différentiel résultant (RxD_TC, RxD_Inv) en un signal de réception non différentiel (RxD1), et
un deuxième multiplexeur (159) pour délivrer le signal non différentiel (RxD1) produit par le bloc de décodage (158) au dispositif de commande de communication (110) lorsque le dispositif d'émission/réception (12 ; 32 ; 120) est commuté dans un mode de fonctionnement (453_B) de la deuxième phase de communication (453).

6. Module d'interface (150) selon la revendication 5, le module d'interface (150) étant conçu de telle sorte que les premier et deuxième multiplexeurs (154, 159) soient commandés par le même signal de commande (TC_MD).

7. Dispositif de commande de communication (11 ; 110) pour une station d'abonné (10) d'un système de bus série (1), comprenant
un module de commande de communication (113) pour produire un signal d'émission (TxD_PRT) pour commander une communication de la station d'abonné (10) avec au moins une autre station d'abonné (10 ; 20 ; 30) du système de bus (1), système de bus (1) dans lequel au moins une première phase de communication (451, 452, 454, 455) et une deuxième phase de communication (453) sont utilisées pour échanger des messages (45 ; 46) entre des stations d'abonné (10, 20, 30) du système de bus (1), et
un module d'interface (15 ; 150) selon l'une quelconque des revendications précédentes,
dans lequel le module de commande de communication (113) est en outre conçu pour produire et délivrer au module d'interface (15 ; 150) un signal de commande (TC_MC) qui indique quand le signal d'émission modulé (TxD_PWM) produit par le modulateur (156) doit être délivré au dispositif d'émission/réception (12 ; 120) de la station d'abonné (10).

8. Dispositif de commande de communication (11 ; 110) selon la revendication 7, dans lequel le signal de signalisation de mode de fonctionnement (TC_MD) signale au module d'interface (15 ; 150) le mode de fonctionnement (451_B ; 453_B) dans lequel le dispositif d'émission/réception (12 ; 32) doit être commuté en fonction de la communication sur le bus (40).

9. Dispositif de commande de communication (110) selon la revendication 7 ou 8, comprenant en outre
une première borne (111) pour envoyer le signal d'émission (TxD_PRT) au dispositif d'émission/réception (120),
une deuxième borne (112) pour recevoir un signal de réception numérique (RxD) du dispositif d'émission/réception (120), et
une troisième borne (114) pour recevoir un signal de réception numérique inverse (RxD) par rapport au signal de réception numérique (RxD) du dispositif d'émission/réception (120) au niveau d'une borne STB (114), qui est prévue pour signaler un état d'attente au dispositif d'émission/réception (120) dans lequel aucune communication n'a lieu sur le bus (40).

10. Dispositif de commande de communication (11 ; 110) selon l'une quelconque des revendications 7 à 9, dans lequel le module de commande de communication (114) est conçu pour produire le signal d'émission (TxD_PRT) dans la première phase de communication (451, 452, 454, 455) avec des bits ayant un premier temps de bit (T_B1) qui est supérieur d'au moins un facteur 10 à un deuxième temps de bit (T_B2) des bits produits par le module de commande de communication (114) dans la deuxième phase de communication (453) dans le signal d'émission (TxD_PRT).

11. Dispositif d'émission/réception (12 ; 32 ; 120) pour une station d'abonné (10 ; 30) d'un système de bus série (1), comprenant
un module d'émission/réception (123) pour émettre un signal d'émission numérique (TxD_TC) converti en signaux (CAN_H, CAN_L) pour des conducteurs de bus (41, 42) d'un bus (40) du système de bus (1), système de bus (1) dans lequel au moins une première phase de communication (451, 452, 454, 455) et une deuxième phase de communication (453) sont utilisées pour échanger des messages (45 ; 46) entre des stations d'abonné (10, 20, 30) du système de bus (1), et pour produire un signal de réception numérique (RxD_TC) à partir d'un signal reçu du bus (40),
une première borne (121) pour recevoir un signal d'émission numérique (TxD) d'un dispositif de commande de communication (11 ; 31),
une deuxième borne (122) pour envoyer le signal de réception numérique (RxD_TC) au dispositif de commande de communication (11 ; 31),
un bloc de codage (16) pour produire un signal de réception inverse (Rx_Inv) par rapport au signal de réception numérique (RxD_TC), et
une troisième borne (124) pour envoyer le signal de réception inverse (RxD_TC) au dispositif de commande de communication (11 ; 31),

12. Dispositif d'émission/réception (120) selon la revendication 11,
dans lequel le module d'émission/réception (123) est conçu pour émettre le signal d'émission (TxD_TC) sous forme de signal différentiel (CAN_H, CAN_L) sur le bus (40), et
dans lequel la troisième borne (124) est une borne STB (124) commutable d'entrée à sortie, qui est prévue pour signaler un état d'attente au dispositif d'émission/réception (120), dans lequel aucune communication n'a lieu sur le bus (40).

13. Dispositif (11 ; 12 ; 32 ; 110 ; 120) selon l'une quelconque des revendications 7 à 12,
dans lequel le signal reçu du bus (40) lors de la première phase de communication (451, 452, 454, 455) est produit avec une couche physique différente de celle du signal reçu du bus (40) lors de la deuxième phase de communication (453), et
dans lequel la première phase de communication (451) sert à déterminer laquelle des stations d'abonnés (10, 20, 30) du système de bus (1) obtiendra, lors de la deuxième phase de communication (453) qui suit, un accès au bus (40) qui lui sera réservé, au moins temporairement, et sans risque de collision.

14. Système de bus (1), comprenant
un bus (40), et
au moins deux stations d'abonné (10 ; 20 ; 30) qui sont reliées l'une à l'autre par le bus (40) de telle sorte qu'elles peuvent communiquer en série entre elles et parmi lesquelles au moins une station d'abonné (10 ; 30) présente un dispositif de commande de communication (11 ; 31) selon l'une quelconque des revendications 7 à 10 et 13 ainsi qu'un dispositif d'émission/réception (12 ; 32 ; 110 ; 120) selon l'une quelconque des revendications 11 à 13.

15. Procédé de communication dans un système de bus série (1), ledit procédé étant mis en œuvre avec une station d'abonné (10 ; 30) pour un système de bus (1), dans lequel au moins une première phase de communication (451, 452, 454, 455) et une deuxième phase de communication (453) sont utilisées pour échanger des messages (45 ; 46) entre des stations d'abonné (10, 20, 30) du système de bus (1), la station d'abonné (10 ; 30) utilisant un module d'interface selon l'une quelconque des revendications 1 à 6, et le procédé comprenant les étapes suivantes consistant à :
moduler, au moyen d'un modulateur (156), un signal d'émission numérique (TxD_PRT) en un signal d'émission numérique modulé (TxD_PWM), qui présente le temps de bit (T_B2) de la deuxième phase de communication (453), lequel est conçu dans au moins un registre de configuration (151 à 154) et diffère du temps de bit (T_B1) de la première phase de communication (451, 452, 454, 455),
délivrer, au moyen du module d'interface, dans la première phase de communication (451, 452, 454, 455), le signal d'émission numérique (TxD_PRT) entré dans le modulateur (156) à un dispositif d'émission/réception (12 ; 120) de la station d'abonné (10 ; 100) afin de convertir le signal d'émission numérique (TxD_PRT) avec le dispositif d'émission/réception (12 ; 120) en signaux (CAN_H, CAN_L) pour des conducteurs de bus (41, 42) d'un bus (40) du système de bus (1) et d'émettre les signaux (CAN_H, CAN_L) sur le bus (40), et
délivrer, au moyen du module d'interface, dans la deuxième phase de communication (453), le signal d'émission numérique modulé (TxD_PWM) produit par le modulateur (156) au dispositif d'émission/réception (12 ; 120) de la station d'abonné (10 ; 100) afin de convertir le signal d'émission numérique modulé (TxD_PWM) avec le dispositif d'émission/réception (12 ; 120) en signaux (CAN_H, CAN_L) pour les conducteurs de bus (41, 42) du bus (40) du système de bus (1) et d'émettre les signaux (CAN_H, CAN_L) sur le bus (40),
dans lequel le modulateur (156) effectue une modulation de largeur d'impulsion du signal d'émission (TxD_PRT), et
dans lequel le modulateur (156) utilise comme paramètre pour la modulation de largeur d'impulsion un décalage de modulation (PWM_OS) que possède ledit au moins un registre de configuration (152).
